# EUROPÄISCHE PATENTANMELDUNG

(11) **EP 4 245 741 A1**
(43) Veröffentlichungstag der Anmeldung: **20.09.2023**
(21) Anmeldenummer: 22166485.7
(22) Anmeldetag: 04.04.2022
(51) Int. Cl.: C05D 9/00, C05B 17/00

(54) **PHOSPHATANGEREICHERTES, SCHWERMETALLABGEREICHERTEN DÜNGEGRANULAT, HERSTELLUNGSVERFAHREN, VORRICHTUNG UND VERWENDUNG**

(30) Priorität: 17.03.2022 DE 102022106256
(71) Anmelder: Pontes pabuli GmbH, 04107 Leipzig (DE)
(72) Erfinder: HAGER, Frank-Thoralf, 04109 Leipzig (DE)
(74) Vertreter: Hertin und Partner Rechts- und Patentanwälte PartG mbB

(57) **Zusammenfassung**

Erfindungsgemäß ist ein phosphatangereichertes, schwermetallabgereichertes Düngegranulat aus mindestens einem anorganischen Sekundärphosphat vorgesehen, dass mit einem zweistrangigem Verfahren hergestellt wird, wobei dem Prozess-Strang A und dem Prozess-Strang B eine Rohstoffdispersion zugeführt wird, in dem diese Rohstoffdispersion
▪ entweder im Prozessschritt a) aus mindestens einem anorganischen Sekundärphosphat und mindestens ein Reaktionsmittel erzeugt wird und diese erzeugte Rohstoffdispersion dem Prozess-Strang A und B geteilt zugeführt wird
▪ oder im Prozessschritt a, a') das anorganischen Sekundärphosphat zunächst aufgeteilt wird, zwei Rohstoffdispersionen (umfassend jeweils eine Teilmenge des mindestens ein anorganischen Sekundärphosphat und mindestens ein Reaktionsmittel) getrennt voneinander erzeugt werden und diese getrennt erzeugten Rohstoffdispersionen dem Prozess-Strang A und B zugeführt wird,
wobei der Anteil an einer flüssigen Phase in der Rohstoffdispersion größer 30 % ist und die Inkubationszeit zwischen anorganischem Sekundärphosphat und Reaktionsmittel zwischen 1 bis 100 Minuten beträgt, wobei der Prozess-Strang A die folgenden Prozessschritte umfasst,
i) Zugabe eines Schwermetallfällungsmittels während der Herstellung der Rohstoffdispersion und/oder während der Inkubationszeit und/oder nach der Inkubationszeit,
j) Abtrennung eines Teils der phosphathaltigen, schwermetallarmen flüssigen Phase der Rohstoffdispersion und Ausschleusen des übrigen schwermetallhaltigen Filterkuchens aus dem Prozess,
k) Ausfällung von Phosphat aus der phosphathaltigen flüssigen Phase,
I) Abtrennung des ausgefällten Phosphates und Rückführung der abgetrennten flüssigen Phase in den Prozessschritt a) zur Herstellung einer Rohstoffdispersion,
wobei der Prozess-Strang B die folgenden Prozessschritte umfasst
m) Abtrennung eines Teils der flüssigen Phase der Rohstoffdispersion,
n) Erzeugung einer Mischung aus mindestens einem Teil des im Prozess-Strang A erzeugten ausgefällten Phosphates und mindestens einem Teil der verbleibenden Rohstoffdispersion mit reduzierter flüssiger Phase aus Prozessschritt f) sowie Granulierung und/oder Extrudierung dieser erzeugten Mischung, wobei eine Trocknung oder Beschichtung der erzeugten Granulate und/oder Extrudate erfolgen kann und Ausschleusung des erzeugten schwermetallabgereicherten Düngergranulats aus den Prozess
o) Rückführung der im Prozessschritt f) abgetrennten Flüssigphase zur Herstellung einer Rohstoffdispersion analog Prozessschritt a) und/oder Zuführung in den Prozessschritt g), wobei zumindest eine teilweises Absondern von Schwermetallen aus der im Prozessschritt f) abgetrennten flüssigen Phase sowie Ausschleusung dieser Schwermetalle aus dem Prozess zuvor erfolgen kann,
und wiederholen der Prozessschritte a) bis h).

## Beschreibung

Die Erfindung betrifft ein phosphatangereichertes, schwermetallabgereichertes Düngegranulat, das zur Nährstoffzufuhr in der Land-, Forstwirtschaft und/oder im Gartenbau verwendet werden kann sowie ein Herstellungsverfahren dafür und eine Vorrichtung zu dessen Herstellung.

### Stand der Technik:

Aktuell gewinnt die thermische Verwertung dieser organischen Reststoffe weiter an Bedeutung. Aschen aus der thermischen Verwertung und/oder Verbrennung organischer Reststoffe sind häufig aufgrund des hohen Gehalts an Nährstoffen, wie beispielsweise Phosphor (P), geeignete Rohstoffquellen. Durch die hohen Verbrennungstemperaturen liegen die Nährstoffkomponenten wie Phosphor meist in einer schlecht pflanzenverfügbaren Form vor. Zudem werden durch die Verbrennung auch Schwermetalle aufkonzentriert. Aufgrund der schlechten Pflanzenverfügbarkeit des in den Aschen enthaltenen Phosphors (P) sowie der Schadstoffgehalte ist eine direkte Verwendung der Aschen als Düngemittel kaum möglich. Deshalb werden aktuell solche Aschen zumeist deponiert oder im Landschaftsbau verwendet und stehen somit den Stoffkreisläufen nicht mehr als Rohstoffquelle zur Verfügung.

Im Stand der Technik sind unterschiedliche Verfahren zur stofflichen Verwertung von phosphorhaltigen Verbrennungsrückständen wie beispielsweise aus Klärschlamm bekannt. Die bekannten Verfahren basieren auf dem Rohstoff Asche, wobei der P-Gehalt in der Asche möglichst hoch sein sollte. Die Verfahren zur Gewinnung von Phosphat aus Klärschlammaschen können allgemein in thermochemische, thermoelektrische und nasschemische Ansätze untergliedert werden.

Bei den nasschemischen Verfahren werden zahlreiche unterschiedliche Konzepte verfolgt, wobei generell zwischen Verfahren, bei welchem Phosphor aus der Asche extrahiert und damit in die flüssige Phase gebracht wird (Leaching-Verfahren) und Verfahren, bei denen die Säure mit der Asche vermischt, dadurch das unlösliche Phosphat pflanzenverfügbar gemacht und aus diesem Gesamtgemisch ein Düngemittel hergestellt wird (P-Umwandlungsverfahren), unterschieden wird.

Leaching-Verfahren, wie BioCon-, SEPHOS-, SESALPhos-, Tetraphos, PASCH- oder Leachphos-Verfahren, basieren darauf, dass durch ein Lösungsmittel das Phosphor aus dem Verbrennungsrückstand möglichst selektiv gelöst und diese phosphorhaltige Lösung von dem unlöslichen Rückstand abgetrennt wird. Die erhaltene phosphorhaltige Lösung wird anschließend von Begleitkomponenten gereinigt und in ein Sekundärphosphatprodukt (z.B. Ca-Phosphat, Phosphorsäure) überführt. Die Verfahren unterscheiden sich untereinander bezüglich der Löse- und Fällungsmittel, der P-Abscheidung, dem Recyclingprodukt und der Art der Schwermetallabscheidung. Vorteil dieser Verfahren ist, dass durch das Lösemittel nur ein Teil der Schwermetalle des Verbrennungsrückstandes gelöst werden. Die gelösten Schwermetalle und mit gelösten Begleitkomponenten werden anschließend über mehrere Reinigungsstufen weitgehend selektiv aus der phosphathaltigen Lösung getrennt. Daraus resultiert ein von Begleitkomponenten befreites, phosphathaltiges Erzeugnis mit niedriger Schwermetallkonzentration. Für die erzeugten Erzeugnisse aus diesen Verfahren bieten sich grundsätzlich verschiedene Anwendungsfelder. Allerdings bleibt praktisch oft nur der Einsatz dieser Erzeugnisse als Zwischenprodukt für die Düngemittelindustrie. Für den Einsatz in der Düngemittelindustrie sind die Produkte im Vergleich zu konventionell hergestellten Düngemitteln in der Regel zu teuer. Dies resultiert zum einen daraus, dass ein sehr hoher Anteil an Rückstand aus dem Löseprozess (unlöslicher Rückstand) als Abfall zurückbleibt, der teuer entsorgt werden muss. Zudem ist die Abtrennung von Begleitkomponenten in der Regel ein mehrstufiger und damit sehr aufwendiger und teurer Prozess, da als phosphatreiches Erzeugnis meist eine hohe Produktreinheit für die vorgesehen Anwendungsfelder erzielt werden soll.

Einen anderen Ansatz verfolgen Verfahren, die die Phosphatphase gezielt pflanzenverfügbar machen und weitgehend den gesamten phosphathaltigen Verbrennungsrückstand in ein Düngemittel überführen (P-Umwandlungsverfahren). Dazu reagiert ein Lösemittel (zumeist Mineralsäure) mit einem phosphathaltigen Verbrennungsrückstand und löst dabei die schlecht pflanzenverfügbare Phosphat-Phase aus dem Verbrennungsrückstand. Anders als bei den Leaching-Verfahren wird anschließend jedoch nicht die phosphathaltige Lösung vom ungelösten Rückstand separiert, sondern das gesamte Gemisch in ein Düngemittel überführt. Vorteil dieser Verfahren ist, dass kein unlöslicher Rückstand anfällt, der in der Regel teuer entsorgt werden muss. Auch sind diese Verfahren verfahrenstechnisch einfacher und weniger komplex. Dadurch sind diese Verfahren in der Regel deutlich kostengünstig und nachhaltiger als Leaching-Verfahren. Beispiel für ein solches Verfahren ist DE 10 2010 034 042 B4.
▪ Bei einigen Ausgestaltungen dieser Verfahrensart der P-Umwandlungsverfahren kann ein Teil der Schwermetalle abgetrennt werden, so beispielsweise in WO 2019/149405 A1. Grundsätzlicher Nachteil ist dabei, dass nur die Schwermetalle abgetrennt werden können, die zuvor durch das Reaktionsmittel aus dem phosphathaltigen Verbrennungsrückstand in die flüssige Phase gelöst wurden. Das ist deshalb problematisch, da die Schwermetalle an unterschiedlichen Phasen im phosphathaltigen Verbrennungsrückstand gebunden sind und diese Phasen unterschiedlich stark durch das Reaktionsmittel gelöst werden. Schwermetalle, die am unlöslichen Rückstand gebunden sind (beispielsweise typischerweise insbesondere Pb, Zn, Ni), können entsprechend nicht abgetrennt werden oder nur im sehr geringen Umfang abgetrennt werden. Dies führt dazu, dass phosphathaltige Verbrennungsrückstände mit dieser Art gebundener Schwermetalle über diese Verfahren nicht in Düngemittel konform der Düngemittelverordnung überführt werden können und somit nicht nutzbar sind.
▪ Weiterer Nachteil dieser Verfahren (P-Umwandlungsverfahren) ist, dass der Phosphatanteil der hergestellten Düngemittel, der aus dem phosphathaltigen Verbrennungsrückstand stammt, verhältnismäßig niedrig ist. Dies resultiert daraus, da die phosphathaltigen Verbrennungsrückstände mit dem Lösungsmittel behandelt werden und beides in das Düngeprodukt überführt wird, wodurch eine Reduzierung (Verdünnung) des prozentualen Phosphatanteils aus dem phosphathaltigen Verbrennungsrückstand resultiert. Zwar bieten diese Verfahren die Möglichkeit, entweder ein phosphathaltiges Lösungsmittel (z.B. Phosphorsäure) einzusetzen oder phosphathaltige Nährstoffkomponenten (z.B. Monoammoniumphosphat (MAP)) zuzusetzen, wodurch der Phosphatgehalt im Dünger erhöht wird. Allerdings sind diese phosphathaltigen Lösemittel oder Nährstoffkomponenten teuer und sehr von einem stark volatilen Weltmarkt abhängig.

### Aufgabe der Erfindung:

Im Anbetracht des Standes der Technik liegt der Erfindung zum einen die Aufgabe zugrunde, verbesserte phosphatangereicherte, und schwermetallreduzierte Düngegranulate anzubieten, die die Pedosphäre in Bezug auf Bodenflora und Bodenfauna optimieren, wobei diese Phosphatanreicherung durch eine Aufkonzentration des Phosphatanteils aus dem anorganischen Sekundärphosphat (z.B. phosphathaltige Asche) resultiert, nur geringe Abfallmengen anfallen und Schwermetalle insgesamt und insbesondere auch die durch das Lösungsmittel gering löslichen Schwermetalle verbessert abgetrennt werden. Zur Bodenflora gehören überwiegend pflanzliche bzw. nicht tierische Organismen, wie z.B. Bakterien, Strahlenpilze, Pilze, Algen und Flechten. Die Bodenfauna setzt sich aus tierischen Einzellern und vielzelligen Organismen zusammen, die nach ihrer Größe differenziert werden in Mikrofauna (< 0,2 mm; z.B. Wimperntiere, Geißeltiere, Amöben, kleine Fadenwürmer), Mesofauna (< 2 mm; z.B. Springschwänze, Rädertiere, Milben), Makrofauna (> 2 mm; z.B. Borstenwürmer, Asseln, Insekten) und Megafauna (> 20 mm; z.B. Wirbeltiere wie Wühlmäuse, Spitzmäuse, Maulwurf). Die Optimierung (Verbesserung) betrifft vor allem zum einen das verbesserte Pflanzenwachstum, als auch das Wachstum der Bakterien, Geißeltierchen, Fadenwürmern, Anneliden oder Insekten und andere.

Der vorliegenden Erfindung liegt auch die Aufgabe zu Grunde, ein wirtschaftliches, ökologisches, flexibles, einfaches und technisch umsetzbares Verfahren zur Herstellung von boden- und/oder pflanzenspezifischen Düngemitteln mit exakt einstellbarer Nährstoffzusammensetzung in Granulatform bereitzustellen.

Durch das erfindungsgemäße Verfahren sollen verschiedenste anorganische Sekundärphosphate effizient und kostengünstig aufbereitet werden können, wobei auch gezielt boden- und pflanzenspezifische Düngerzusammensetzungen bereitgestellt werden sollen, wobei im daraus resultierendem Düngergranulat ein Großteil des aufkonzentrierten Phosphates in einer gut pflanzenverfügbaren Form vorliegen soll und zumindest ein Teil der Schwermetallen abgetrennt ist. Außerdem soll ein Düngemittel bereitgestellt werden, dass in der Landwirtschaft, in der Forstwirtschaft oder im Gartenbau als Pedoshärenverbesserer eingesetzt und/oder verwendet werden kann.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben.

Erfindungsgemäß ist ein phosphatangereichertes, schwermetallabgereichertes Düngegranulat aus mindestens einem anorganischen Sekundärphosphat vorgesehen, dass mit einem zweistrangigem Verfahren hergestellt wird, wobei dem Prozess-Strang A und dem Prozess-Strang B eine Rohstoffdispersion zugeführt wird, in dem diese Rohstoffdispersion
▪ entweder im Prozessschritt a) aus mindestens einem anorganischen Sekundärphosphat und mindestens ein Reaktionsmittel erzeugt wird und diese erzeugte Rohstoffdispersion dem Prozess-Strang A und B geteilt zugeführt wird
▪ oder im Prozessschritt a, a') das anorganischen Sekundärphosphat zunächst aufgeteilt wird, zwei Rohstoffdispersionen (umfassend jeweils eine Teilmenge des mindestens ein anorganischen Sekundärphosphat und mindestens ein Reaktionsmittel) getrennt voneinander erzeugt werden und diese getrennt erzeugten Rohstoffdispersionen dem Prozess-Strang A und B zugeführt wird,
wobei der Anteil an einer flüssigen Phase in der Rohstoffdispersion größer 30 % ist und die Inkubationszeit zwischen anorganischem Sekundärphosphat und Reaktionsmittel zwischen 1 bis 100 Minuten beträgt, wobei der Prozess-Strang A die folgenden Prozessschritte umfasst,
b) Zugabe eines Schwermetallfällungsmittels während der Herstellung der Rohstoffdispersion und/oder während der Inkubationszeit und/oder nach der Inkubationszeit,
c) Abtrennung eines Teils der phosphathaltigen, schwermetallarmen flüssigen Phase der Rohstoffdispersion und Ausschleusen des übrigen schwermetallhaltigen Filterkuchens aus dem Prozess,
d) Ausfällung von Phosphat aus der phosphathaltigen flüssigen Phase,
e) Abtrennung des ausgefällten Phosphates und Rückführung der abgetrennten flüssigen Phase in den Prozessschritt a) zur Herstellung einer Rohstoffdispersion,
wobei der Prozess-Strang B die folgenden Prozessschritte umfasst
f) Abtrennung eines Teils der flüssigen Phase der Rohstoffdispersion,
g) Erzeugung einer Mischung aus mindestens einem Teil des im Prozess-Strang A erzeugten ausgefällten Phosphates und mindestens einem Teil der verbleibenden Rohstoffdispersion mit reduzierter flüssiger Phase aus Prozessschritt f) sowie Granulierung und/oder Extrudierung dieser erzeugten Mischung, wobei eine Trocknung oder Beschichtung der erzeugten Granulate und/oder Extrudate erfolgen kann und Ausschleusung des erzeugten schwermetallabgereicherten Düngergranulats aus den Prozess
h) Rückführung der im Prozessschritt f) abgetrennten Flüssigphase zur Herstellung einer Rohstoffdispersion analog Prozessschritt a) und/oder Zuführung in den Prozessschritt g), wobei zumindest eine teilweises Absondern von Schwermetallen aus der im Prozessschritt f) abgetrennten flüssigen Phase sowie Ausschleusung dieser Schwermetalle aus dem Prozess zuvor erfolgen kann,
und wiederholen der Prozessschritte a) bis h).

Daher bezieht sich die Erfindung in einem weiteren Aspekt auf ein Verfahren zur Herstellung eines phosphatangereichertes, schwermetallabgereicherten Düngergranulat (11) aus mindestens einem anorganischen Sekundärphosphat (1) durch ein zweistrangiges Verfahren, wobei dem Prozess-Strang A und dem Prozess-Strang B eine Rohstoffdispersion (3, 3') zugeführt wird, in dem diese Rohstoffdispersion
▪ entweder im Prozessschritt a) aus mindestens einem anorganischen Sekundärphosphat (1) und mindestens ein Reaktionsmittel (2) erzeugt wird und diese erzeugte Rohstoffdispersion (3) dem Prozess-Strang A und B geteilt zugeführt wird
▪ oder im Prozessschritt a), a') das anorganischen Sekundärphosphat (1) zunächst aufgeteilt wird, zwei Rohstoffdispersion (3, 3') umfassend jeweils eine Teilmenge des mindestens ein anorganischen Sekundärphosphat (1) und mindestens ein Reaktionsmittel (2, 2') getrennt voneinander erzeugt werden und diese getrennt erzeugten Rohstoffdispersionen (3, 3') dem Prozess-Strang A und B zugeführt werden,
wobei der Anteil an einer flüssigen Phase in der Rohstoffdispersion (3, 3') größer 30 % ist und die Inkubationszeit zwischen anorganischem Sekundärphosphat (1) und Reaktionsmittel (2, 2') zwischen 1 bis 100 Minuten beträgt,
wobei der Prozess-Strang A die folgenden Prozessschritte umfasst,
   b) Zugabe mindestens eines Schwermetallfällungsmittels (4) während und/oder nach der Inkubationszeit,
   c) Abtrennung eines Teils der phosphathaltigen, schwermetallarmen flüssigen Phase (5) der Rohstoffdispersion und Ausschleusen des übrigen schwermetallhaltigen Filterkuchens (6) aus dem Prozess,
   d) Ausfällung von Phosphat (7) aus der phosphathaltigen flüssigen (5) Phase,
   e) Abtrennung des ausgefällten Phosphates (7) und zumindest anteilige Rückführung der abgetrennten flüssigen Phase (8) in den Prozessschritt a) zur Herstellung einer Rohstoffdispersion,
wobei der Prozess-Strang B die folgenden Prozessschritte umfasst
   f) Abtrennung eines Teils der flüssigen Phase der Rohstoffdispersion (3),
   g) Erzeugung einer Mischung aus mindestens eine Teil des im Prozess-Strang A erzeugten ausgefällten Phosphates (7) und mindestens einem Teil der verbleibenden Rohstoffdispersion mit reduzierter flüssiger Phase (9) aus Prozessschritt f) sowie Granulierung und/oder Extrudierung dieser erzeugten Mischung, wobei eine Trocknung oder Beschichtung der erzeugten Granulate und/oder Extrudate erfolgen kann und Ausschleusung des erzeugten phosphatangereicherten, schwermetallabgereicherten Düngergranulats (10) aus den Prozess,
   h) Zumindest anteilige Rückführung der im Prozessschritt f) abgetrennten Flüssigphase 11, 11') zur Herstellung einer Rohstoffdispersion analog Prozessschritt a) und/oder Zuführung in den Prozessschritt g), wobei zumindest eine teilweises Absondern von Schwermetallen (12) aus der im Prozessschritt f) abgetrennten flüssigen Phase sowie Ausschleusung dieser Schwermetalle (12) aus dem Prozess zuvor erfolgen kann,
   und wiederholen der Prozessschritte a) bis h).

Wesen des erfindungsgemäßen Verfahrens ist, dass das oder die eingesetzten phosphathaltige(n) Sekundärphosphat(e) auf zwei unterschiedliche Prozess-Stränge A und B aufgeteilt wird/werden, also zwei Prozess-Stränge parallel zum Einsatz kommen.
▪ Im Prozess-Strang A wird aus dem Anteil des mindestens einen phosphathaltigen Sekundärphosphats das Phosphat von den Schwermetallen separiert und ausgefällt. Es resultiert ein hochkonzentriertes, ausgefälltes Phosphat, welches im Vergleich zum eingesetzten anorganischen Sekundärphosphat deutlich besser pflanzenverfügbar ist. Besonderheit ist dabei, dass in diesem Prozess-Strang A insbesondere auch die durch das Reaktionsmittel nicht gelösten Schwermetalle (schwerlöslichen Schwermetalle) neben den leichtlöslichen Schwermetallen (gelöst durch das Reaktionsmittel) abgetrennt werden.
▪ Im Prozess-Strang B wird der (komplette) Anteil des mindestens einen phosphathaltigen Sekundärphosphats in ein Düngemittel überführt, wobei das Phosphat pflanzenverfügbar gemacht wird und die durch das Reaktionsmittel gelösten Schwermetalle zumindest anteilig abgetrennt werden können und erfindungsgemäß das im Prozess-Strang A erzeugte gefällte, weitgehend schwermetallfreie Phosphat zur Steigerung des Phosphatanteils (phosphatangereichert) im erzeugten Dünger zugeführt wird. Das im Prozess-Strang A aus dem dort eingesetzten Teilstrom des phosphathaltigen Sekundärphosphats erzeugte ausgefällte Phosphat
   ∘ erhöht dabei zum einen den Phosphatgehalt des erzeugten Düngers ohne dass eine phosphathaltige Nährstoffkomponente zugeführt werden muss (phosphatangereichert) und
   ∘ führt zu einem reduzierten Schwermetallgehalt insbesondere bei den schwerlöslichen Schwermetallen.
      "Phosphatangereichertes" Düngemittel im Sinne der Erfindung ist dadurch definiert, dass die Phosphatkonzentration des im erfindungsgemäßen Verfahren erzeugten Düngemittels, bezogen allein auf die Gesamtmenge des Phosphates zugeführt mit dem anorganischen Sekundärphosphat, erfindungsgemäß höher ist, als die Phosphatkonzentration im eingesetzten anorganischem Sekundärphosphat. Enthält also beispielsweise ein eingesetztes anorganisches Sekundärphosphat 7 % P2O5 als Phosphat, resultiert aus dem erfindungsgemäßen Verfahren ein Dünger mit mehr als 7 % P2O5 als Phosphat

Die Teilstrommengen an phosphathaltigen Sekundärphosphat für Prozess-Strom A und B werden dabei erfindungsgemäß so gesteuert, dass gezielt ein gewünschter Phosphatgehalt im Düngerprodukt und die Menge an abgetrennten Schwermetallen eingestellt werden. Vorteil des erfindungsgemäßen zweistrangigen Verfahrens (umfassend Strang A und Strang B) ist somit, dass ein einstellbares phosphatangereichertes, schwermetallabgereichertes Düngegranulat aus mindestens einem anorganischen Sekundärphosphat erzeugt wird. Ausgestaltungsmöglichkeiten des erfindungsgemäßen Verfahrens werden in nachfolgender Beschreibung dargestellt.

Das erfindungsgemäße Verfahren bietet überaschenderweise verschiedene Vorteile gegenüber bekannten Verfahren aus dem Stand der Technik wie beispielsweise:
▪ Bei den oben beschrieben P-Umwandlungsverfahren aus dem Stand der Technik wie beispielsweise aus DE 10 2010 034 042 B4 oder WO 2019/149405 A1 bekannt, wird ein phosphathaltiger Verbrennungsrückstand (anorganischen Sekundärphosphat) mit dem Lösungsmittel (Reaktionsmittel) behandelt und beides in das Düngeprodukt überführt, wodurch eine Reduzierung (Verdünnung) des prozentualen Phosphatanteils aus dem phosphathaltigen Verbrennungsrückstand resultiert. Hingegen erzeugt das erfindungsgemäße Verfahren ein phosphatangereichertes Düngegranulat mit einer höheren Phosphatkonzentration als das eingesetzte anorganische Sekundärphosphat.
▪ Die P-Umwandlungsverfahren aus dem Stand der Technik wie beispielsweise WO 2019/149405 A1 können zwar einen Teil der Schwermetalle abtrennen. Abgetrennt werden können jedoch ausschließlich die Schwermetalle, die durch das Lösungsmittel (Reaktionsmittel) zuvor gelöst wurden. Die nicht gelösten Schwermetalle können in diesen Verfahren nicht abgetrennt werden. Im erfindungsgemäßen Verfahren werden hingegen auch die durch das Lösungsmittel (Reaktionsmittel) ungelösten Schwermetalle anteilig abgetrennt. Bevorzugt werden dabei im erfindungsgemäßen Verfahren mehr als 30 %, besonders bevorzugt mehr als 50 % der im anorganischen Sekundärphosphat enthaltenen, dem Prozess-Strang A und B mit dem anorganischen Sekundärphosphat insgesamt zugeführten und nicht durch das Reaktionsmittel gelösten Schwermetalle abgetrennt.
▪ In den Leaching-Verfahren aus dem Stand der Technik resultiert eine sehr große Menge an ungelösten Rückständen, da der Leaching-Prozess so gesteuert wird, dass möglichst alles Phosphat und möglichst wenig Begleitkomponenten gelöst werden. Die dennoch mit gelösten Begleitkomponenten werden bei diesen Verfahren anschließend aufwendig, oft mehrstufig abgetrennt. Der abgetrennte ungelöste Rückstand und die abgetrennten mit gelösten Begleitkomponenten könnten (im Grunde nur theoretisch) anderweitig verwertet werden, sind aber typischerweise ein Abfall zur Entsorgung. In dem erfindnungsgemäßen Verfahren fällt hingegen nur in dem Prozess-Strom A ein unlöslicher Rückstand an. Die dort mit gelösten Begleitkomponenten werden, anders als im Stand der Technik, gemeinsam mit dem ausgefällten Phosphat in das Düngemittel überführt und sind somit auch kein Abfall. Im Prozess-Strang B wird das gesamte zugeführte anorganische Sekundärphosphat in den Dünger überführt und so einer Verwertung zugeführt. Damit erzeugt das erfindungsgemäße Verfahren deutlich weniger ungelösten Rückstand (also Abfall) als bekannte Leaching-Verfahren.

Die Gesamtmenge an Phosphor (P) sowie die Schwermetalle wie beispielsweise Blei, Cadmium, Nickel werden mittels induktiv-gekoppelter Plasma-Atom-Emissionsspektrometrie (ICP-OES) gemäß DIN EN ISO 11885:2009 bestimmt. Dazu wird die zu bestimmende Probe zunächst mit einem Königswasseraufschluss gemäß DIN EN 13346:2001-04 aufgeschlossen. Zur Bestimmung des löslichen Phosphatanteils sind unterschiedliche Verfahren, insbesondere unterschiedliche Extraktionsverfahren bekannt. Zur Abschätzung der P-Verfügbarkeit werden dazu die Düngemittel im Labor mit unterschiedlichen Lösungsmitteln untersucht und entsprechend gekennzeichnet. Die wichtigsten eingesetzten Lösungsmittel sind Wasser, Ammoncitrat, Zitronensäure, Ameisensäure und Mineralsäuren. Auch in der EU-Verordnung über Düngemittel sind verschiedene Verfahren zur Bestimmung der Phosphatlöslichkeit von Düngemitteln normiert. Je nach Herkunft und Beschaffenheit des zu prüfenden P-Düngers kann ein unterschiedliches Verfahren zum Einsatz kommen. Zur Charakterisierung der Löslichkeit des Phosphates werden im Kontext der vorliegenden Erfindung die drei folgenden Extraktionsverfahren angewendet: Die Extraktion des in Wasser löslichen Phosphors (P) erfolgt gemäß DIN EN15958:2011. Die Extraktion des in neutralem Ammoniumcitrat löslichen Phosphors (P) erfolgt gemäß DIN EN15957:2011. Die Extraktion des 2%iger Citronensäure löslichen Phosphors (P) erfolgt gemäß DIN EN15920:2011. Der Phosphatgehalt (P) wird anschließend mittels induktiv-gekoppelter Plasma-Atom-Emissionsspektrometrie (ICP-OES) gemäß DIN EN ISO 11885:2009 bestimmt.

Insbesondere bei hohen Anteilen von wasser- und ammoncitratlöslichem Phosphat ist gewährleistet, dass ein großer Teil des Düngerphosphats tatsächlich kurz- und mittelfristig der Pflanze zur Verfügung steht. Der neutral-ammoncitratlösliche Phosphoranteil kann dabei als Anhaltspunkt für die mittelfristige Pflanzenverfügbarkeit des Düngephosphors herangezogen werden, d. h. über den Zeitraum von etwa einer Fruchtfolge. Der unmittelbar verfügbare P-Anteil eines Düngemittels wird durch seine Löslichkeit in Wasser beschrieben. Je höher der wasserlösliche P-Anteil, desto schneller bzw. leichter die Verfügbarkeit des Dünge-Phosphors für die Pflanze. Mit stärkeren Lösungsmitteln, wie Zitronen- oder Ameisensäure, werden auch P-Anteile gelöst, die allenfalls langfristig oder nur unter bestimmten Standortbedingungen, wie tiefen pH-Werten, pflanzenverfügbar sind. Pflanz- und Vegetationsversuche haben gezeigt, dass vor allem eine gute Korrelation zwischen neutralammoncitratlöslichem Phosphatanteil und dem Wachstum der Pflanzen besteht. Hohe Wasserlöslichkeit stellt Phosphat sehr schnell in großen Mengen zur Verfügung, was die Pflanze unter Umständen im Wachstum gar nicht in gleicher zeitlicher Abfolge vollständig aufnehmen kann, dann also ungenutzt bleibt und gegebenenfalls ausgewaschen wird. Nach heute übereinstimmender wissenschaftlicher Meinung sollte aus Gründen des Ressourcenschutzes die Verwendung von P-Düngemitteln bevorzugt werden, die einen besonders hohen neutral-ammoncitratlöslichen Phosphatanteil aufweisen. Insofern erfüllt die vorliegende Erfindung die Forderung nach hohen neutral-ammoncitratlöslichen Phosphatanteilen, indem mit dem vorgeschlagenen Verfahren Düngergranulate mit einem besonders hohen neutral-ammoniumcitratlöslichen P2O5-Anteil von größer 60 %, bevorzugt größer 70 %, besonders bevorzugt größer 80 % am gesamten P2O5-Anteil im Düngergranulat bereitgestellt werden.

Düngemittel sind im Sinne der Erfindung Stoffe oder Stoffgemische, die das Nährstoffangebot für die angebauten Pflanzen, insbesondere Kulturpflanzen, in der Land- und Forstwirtschaft sowie im Gartenbau ergänzen beziehungsweise einstellen und sie können gegebenenfalls mit weiteren Materialien kombiniert und/oder funktionalisiert werden. Als Düngemittel werden hier sowohl Einzelnährstoffdünger, wie Phosphatdünger, als auch Mehrnährstoffdünger verstanden. Düngemittel in Granulatform, d.h. Düngergranulat, ist ein Haufwerk typischerweise in annähernd sphärischer Form und ausreichender Eigenfestigkeit mit einer mittleren Granulatgröße von 0,5- 10 mm, bevorzugt 1-7 mm, ganz besonders bevorzugt 2-5 mm.

Als anorganisches Sekundärphosphat werden im Sinne der Erfindung solche Stoffe bezeichnet, die bei der Aufbereitung, Zubereitung oder Herstellung von etwas entstehen (Überrest) und einen Phosphoranteil größer als 5 % P2O5 und einen TOC-Anteil (TOC = total organic carbon) von kleiner als 3 % aufweisen. Beispiele für anorganische Sekundärphosphate sind Aschen und/oder Schlacken aus der Mono- oder Mitverbrennung von Klärschlamm, Aschen und/oder Schlacken aus der Verbrennung bzw. Mitverbrennung von Tierausscheidungen, Tiermehl, Tierreste und Tierkörper oder Aschen/Schlacken aus der Verbrennung von Gülle und Gärresten als Einzelstoff bzw. Gemische daraus. Die im anorganischen Sekundärphosphat, den Zwischenprodukten und erzeugten Düngemittel im erfindungsgemäßen Verfahren enthaltenen Phosphorverbindungen werden hier als Phosphat bezeichnet und die Phosphor- bzw. Phosphatkonzentration einheitlich als P2O5 angegeben, auch wenn dies in ihrer Gesamtheit in Einzelfällen nicht oder nicht vollständig der Bindungsart des Phosphors entsprechen sollte.

Organische Schlämme, wie beispielsweise Klärschlämme, sind dabei ausdrücklich keine erfindungsgemäßen anorganischen Sekundärphosphate, da deren TOC-Anteil deutlich über der definierten Grenze von 3 % liegt. Aber auch die chemisch-physikalische Konstitution von Klärschlämmen unterscheidet sich grundsätzlich von den erfindungsgemäßen anorganischen Sekundärphosphaten beispielsweise in Art, Konzentration und Pflanzenverfügbarkeit des beinhalteten Phosphates. Klärschlämme eignen sich direkt als Dünger und werden dafür auch seit Jahrzehnten eingesetzt, da darin die Phosphate bereits in ausreichend pflanzenverfügbarer Form vorliegen. Eine erfindungsgemäße Klärschlammasche (als eine Möglichkeit für ein anorganisches Sekundärphosphat) entsteht durch die thermische Verbrennung von Klärschlamm. Die Phosphate im Klärschlamm werden jedoch durch den Verbrennungsprozess in schwerlösliche Ca-(Mg)-Phosphate überführt. Damit sind zwar sowohl im Klärschlamm als auch in der Klärschlammasche Phosphate vorhanden, die Bindungsform der Phosphate ist jedoch grundsätzlich anders. Daraus resultieren grundlegend andere Anforderungen an den Reaktionsprozess hin zu einer verbesserten Löslichkeit bzw. Pflanzenverfügbarkeit. Klärschlämme werden seit Jahrzehnten zur Düngung eingesetzt, da dort die Phosphate ausreichend pflanzenverfügbar vorliegen. Hingegen eignen sich Klärschlammaschen aufgrund der anderen Phosphatform, also die hier vorliegenden schwerlöslichen Phosphate gerade nicht ohne den vorherigen Aufschluss als Düngemittel, da die Pflanzen die schwerlöslichen Phosphate nicht im ausreichendem Umfang aufnehmen können.

Unter einem Reaktionsmittel ist im Kontext der vorliegenden Erfindung ein Stoff oder ein Gemisch zu verstehen, der/das zum einen zumindest einen Teil des durch das anorganische Sekundärphosphat zugeführten Phosphates löst und/oder mit diesen reagiert und zum anderen zumindest einen Teil der Schwermetalle aus dem anorganischen Sekundärphosphat löst. Reaktionsmittel sind beispielsweise organische oder anorganische Säuren oder Säuregemische oder Laugen oder Gemische aus unterschiedlichen Laugen, jeweils in unverdünnter oder verdünnter Form.

Als flüssige Phase wird im Kontext der vorliegenden Erfindung die Summe der flüssigen Stoffe in einem zusammenhängenden System definiert. So besteht die Rohstoffdispersion aus einer festen und einer flüssigen Phase. Die feste Phase ist im Kontext der vorliegenden Erfindung die Summe der ungelösten Stoffe. Die flüssige Phase in einem System, zum Beispiel in einer Rohstoffdispersion, kann dabei aus unterschiedlichen flüssigen Komponenten gebildet werden. So können flüssige Komponenten beispielsweise zumindest anteilig in Form von Feuchte, anteilig in einer Suspension oder als Flüssigkeit über verschiedene Stoffe bzw. zum Beispiel als Wasser zugeführt werden oder zumindest anteilig im Reaktionsmittels, beispielsweise flüssige insbesondere auch verdünnte Säuren, enthalten sein. Der Begriff "Feuchte" entspricht im Sinne der Erfindung dem physikalisch gebundenen Wasser, welches am Stoff oder Stoffgemisch anhaftet. Der Begriff "Feuchte" wird auch synonym verwendet mit dem Begriff "Feuchtegehalt".

Die Feuchte beziehungsweise der Feuchtegehalt wird im Kontext der vorliegenden Erfindung gravimetrisch nach DIN 52183 bestimmt. Bei der auch als Darr-Methode bekannten gravimetrischen Feuchtigkeitsbestimmung wird die Probe zuerst gewogen und anschließend bei 105°C in einem Trockenofen bis zur Gewichtskonstanz getrocknet. Dabei entweicht das in der Probe enthaltene freie Wasser. Die Gewichtsdifferenz wird festgestellt, welche im Kontext der vorliegenden Erfindung der Feuchte bzw. dem Feuchtegehalt entspricht. Da die flüssige Phase auch gelöst vorliegende Komponenten beinhalten kann, die bei der Trocknung als Feststoff verbleiben, ist in der Regel der prozentuale Anteil der flüssigen Phase zum Teil deutlich höher als die Feuchte. Der prozentuale Anteil an flüssiger Phase entspricht dem Massenanteil der flüssig vorliegenden Komponenten (einschließlich gelöster Bestandteile darin) in einem System.

**Im Prozessschritt a)** wird eine Rohstoffdispersion für den Prozess-Strang A und dem Prozess-Strang B bereitgestellt, wobei der Anteil an flüssiger Phase in der Rohstoffdispersion größer 30 % ist.

In einer bevorzugten Ausführungsform wird dazu aus mindestens einem anorganischen Sekundärphosphat und mindestens ein Reaktionsmittel eine Rohstoffdispersion erzeugt und diese erzeugte Rohstoffdispersion dem Prozess-Strang A und B geteilt zugeführt. Vorteil dieser Ausführungsform ist beispielsweise, dass die Herstellung nur einer Rohstoffdispersion für Prozess-Strang A und B gemeinsam einfacher in der Handhabung (Handling), weniger aufwendig in der Prozesssteuerung ist und für die Herstellung der Rohstoffdispersion nur ein geeigneter Reaktionsbehälter benötigt wird.

In einer anderen bevorzugten Ausführungsform wird das anorganische Sekundärphosphat zunächst in zwei separate Teilströme für die spätere Weiterverarbeitung in Prozess-Strom A und B aufgeteilt. Aus den aufgeteilten Teilströmen werden anschließend jeweils eine Rohstoffdispersion aus dem jeweiligen Teilstrom des mindestens einen anorganischen Sekundärphosphates und mindestens ein Reaktionsmittel separat erzeugt und dem Prozess-Strang A bzw. B zugeführt. Vorteil dieser Ausführungsform ist dabei, dass die so erzeugten zwei separaten Rohstoffdispersionen unterschiedlich, dem jeweiligen Prozess-Strang angepasst konditioniert werden können. So können beispielsweise unterschiedliche Reaktionsmittel oder unterschiedliche Anteile an flüssiger Phase eingesetzt oder unterschiedliche Reaktionsparameter wie pH-Wert oder Inkubationszeit gewählt werden, um gezielt die Löse- und Umwandlungsreaktion zwischen anorganischem Sekundärphosphat und Reaktionsmittel auch hinsichtlich der Anforderungen zur unterschiedlichen verfahrenstechnischen Weiterverarbeitung im Prozess-Strang A bzw. B einzustellen. So kann beispielsweise in einer bevorzugten Ausführungsform der Anteil an gelöstem Phosphat aus dem anorganischen Sekundärphosphat in der Rohstoffdispersion für Prozess-Strang A von größer 90% eingestellt werden, wodurch eine besonders wirtschaftliche Gewinnung des Phosphats als phosphathaltiger Filterkuchen aus diesem Teilstrom resultiert. In der Rohstoffdispersion für Prozess-Strang B kann hingegen beispielsweise das Phosphat zunächst gelöst, dann aber zumindest anteilig ausgefällt werden, wodurch eine leichtere Abtrennung in dem nachfolgenden Prozessschritt resultiert.

Die Rohstoffdispersion, die im Kontext des vorgeschlagenen Verfahrens verwendet wird, weist einen deutlich höheren Anteil an flüssiger Phase auf als im Vergleich zu konventionellen Verfahren, die aus dem Stand der Technik beispielsweise aus DE 10 2010 034 042 B4 bekannt sind. Es ist im Stand der Technik bekannt, dass die Phosphataschen mit Mineralsäure direkt und erdfeucht vermischt und gleichzeitig granuliert werden. Die im Kontext der vorgeschlagenen Erfindung vorgesehene Herstellung einer Rohstoffdispersion hat dadurch erhebliche technische Vorteile. So werden die beim Mischen der phosphathaltigen Sekundärrohstoffe mit der Mineralsäure häufig spontan ablaufenden und zum Teil sehr exothermen Reaktionen kontrollier- und steuerbar. Der erfindungsgemäße höhere Anteil an flüssiger Phase wirkt vorteilhafterweise als Reaktionspuffer. Auch ist eine Rohstoffdispersion mit deutlich höherem Anteil an flüssiger Phase wesentlich weniger klebrig. Eine stabile Prozessführung wird damit wesentlich erleichtert und Anhaftung und Verstopfung von Anlagenteilen können dadurch effektiv reduziert werden. Aus diesem Grund enthält bzw. enthalten die erzeugte(n) Rohstoffdispersion(en) einen Anteil an flüssiger Phase von bevorzugt größer als 50 %, besonders bevorzugt größer als 70 %.

In einer bevorzugten Ausführungsform der Erfindung enthält bzw. enthalten die Rohstoffdispersion(en) nach der erfindungsgemäß vorgesehenen Inkubationszeit vorzugsweise eine ungelöste feste Phase, von weniger als 40 %. In diesem Bereich ist eine besonders gute und einfache Homogenisierung der erzeugten Rohstoffdispersion möglich. In einer besonders bevorzugten Ausführungsform der Erfindung enthält eine oder die beiden Rohstoffdispersion(en) nach der erfindungsgemäß vorgesehenen Inkubationszeit eine ungelöste feste Phase von weniger als 30 %. Bei solchen Verhältnissen ist die Lösegeschwindigkeit verhältnismäßig hoch, wodurch die notwendige Reaktionszeit vorteilhafterweise verkürzt werden kann. In einer anderen, ebenfalls bevorzugten Ausführungsform der Erfindung enthält die dem Prozess-Strang B zugeführte Rohstoffdispersion nach der erfindungsgemäß vorgesehenen Inkubationszeit einen Anteil an fester Phase von weniger als 15%. Bei diesem niedrigen ungelösten Anteil und respektive hohen Flüssigphasenanteil stellen sich verhältnismäßig niedrige Konzentrationen der gelöste Schwermetalle in der flüssigen Phase ein, weil der gelöste Anteil an Schwermetallen durch den hohen Anteil an flüssigen Phase verdünnt wird. Durch die teilweise Abtrennung der flüssigen Phase im Prozessschritt f) resultiert dann ein niedrigerer Schwermetallgehalt in der beim Feststoff verbleibenden, nicht abgetrennten flüssigen Phase. So resultiert eine gewünschte höhere Schwermetallabtrennung im Schritt f) bei gleicher Abtrennintensität.

Zur Einstellung des bevorzugten Anteils an flüssiger Phase kann oder können eine oder mehrere flüssige Komponenten der oder den Rohstoffdispersion(en) zugegeben werden. In einer bevorzugten Ausführungsform der Erfindung wird die flüssige Phase aus Prozessschritt h) zumindest teilweise in den Prozessschritt a) zurückgeführt. Diese flüssige Phase aus Prozessschritt h) kann noch einen Anteil der gelösten Nährstoffkomponenten, beispielsweise Phosphat, enthalten. Alternativ oder zusätzlich können auch Wasser und/oder flüssige nährstoffhaltige Lösungen zugegeben werden. Nährstoffhaltige Lösungen enthalten vorzugsweise Nähr- und/oder Spurenstoffe, die im vorgeschlagenen Düngergranulat enthalten sind.

Das im anorganischen Sekundärphosphat enthaltene Phosphat dient im erzeugten Düngemittel vorteilhafterweise als Nährstoffkomponente. Hohe Phosphatgehalte, insbesondere beim anorganischen Sekundärphosphat sind hier entsprechend erwünscht. Bevorzugt werden deshalb anorganische Sekundärphosphate mit größer 5 % P2O5, besonders bevorzugt mit größer 7 % P2O5 und ganz besonders bevorzugt mit größer 10 % P2O5. Daneben kann das anorganische Sekundärphosphat weitere Komponenten enthalten. Vorteilhaft ist, wenn weitere Nährstoffkomponenten enthalten sind, so beispielsweise N, K, Mg oder andere Spurennährstoffe.

Der im anorganischen Sekundärphosphat vorhandene Phosphatanteil weist typischerweise eine verhältnismäßig geringe Löslichkeit auf. Entsprechend sind solche Stoffe, wie beispielsweise Klärschlammaschen, nur bedingt als Düngemittel geeignet. Typischerweise zeigen diese anorganischen Sekundärphosphate eine Wasserlöslichkeit von kleiner als 20 % und eine Neutralammoniumcitratlöslichkeit von kleiner als 50%, vorzugsweise jeweils bezogen auf den Gesamtphosphatgehalt im anorganischen Sekundärphosphat. Für einen sinnvollen Einsatz als Düngemittel ist es im Sinne der Erfindung bevorzugt, dass dieses unzureichend lösliche Phosphat in ein besser lösliches und damit besser pflanzenverfügbares Phosphat umgewandelt wird. Die Umwandlung erfolgt erfindungsgemäß durch zumindest teilweise Reaktion des anorganischen Sekundärphosphats mit mindestens einem Reaktionsmittel. Das Reaktionsmittel ist vorzugsweise dazu eingerichtet, zumindest einen Teil des im anorganischen Sekundärphosphat enthaltenen Phosphates zu lösen und/oder mit diesem so zu reagieren bzw. das Phosphat durch Reaktion umzuwandeln, dass ein besser neutral-ammoniumcitratlösliches Phosphat entsteht. Das vorzugsweise durch das Reaktionsmittel gelöste Phosphat bildet im anschließenden Prozess, zum Beispiel durch Fällung, Umkristallisation oder bei der Trocknung, vorteilhafterweise ein besser neutral-ammoniumcitratlösliches Phosphat als im anorganischen Sekundärphosphat. Der Begriff "besser neutral-ammoniumcitratlöslich" bedeutet im Sinne der Erfindung bevorzugt, dass die Neutralammoniumcitratlöslichkeit des Phosphates im anorganischen Sekundärphosphat nach der Reaktion mit dem Reaktionsmittel höher ist. Bevorzugt ist dabei eine Erhöhung der Neutralammoniumcitratlöslichkeit um größer als 20 %, besonders bevorzugt ist eine Erhöhung um größer 50 %. Ein entsprechendes Berechnungsbeispiel kann wie folgt aussehen: die Neutralammoniumcitratlöslichkeit des Phosphatanteils aus dem unbehandeltem Sekundärphosphat von 50 % wird durch die Reaktion mit dem Reaktionsmittel um 20 % auf 60% erhöht. Das Reaktionsmittel wird insbesondere so ausgewählt, dass es die genannten Anforderungen vorzugsweise beim Aufgeben erfüllt. Bei Einsatz von Säuren unterscheidet sich das vorgeschlagene Verfahren insbesondere dadurch vom Stand der Technik, dass das Phosphat zumindest teilweise reagiert und die Löslichkeit erhöht wird.

Es ist im Sinne der Erfindung bevorzugt, dass durch die Reaktion zwischen anorganischem Sekundärphosphat und Reaktionsmittel die Löslichkeit des Phosphates aus dem anorganischem Sekundärphosphat erhöht wird. Die P-Löslichkeit wird vorzugsweise festgelegt durch die Art der P-Bindung und das Lösungsmilieu. Durch die Art der Reaktionsführung im Prozessschritt a) kann auf die Bindung des P, also auf die sich ausbildenden Phosphatphasen, Einfluss genommen werden. Dies kann beispielsweise durch die Art und Konzentration des Reaktionsmittels, die Reaktionszeit und/oder die Prozesstemperatur geschehen. Bevorzugt weist der Phosphatanteil aus dem anorganischen Sekundärphosphat anschließend im erzeugten Düngergranulat eine Neutralammoniumcitratlöslichkeit von größer als 60 %, bevorzugt größer als 70 %, besonders bevorzugt größer als 80 % auf. Durch die bevorzugte Reaktion bzw. Umwandlung des Phosphates und die bevorzugte resultierende Neutralammoniumcitratlöslichkeit aus dem anorganischen Sekundärphosphat werden vorteilhafterweise eine bessere Phosphat-Pflanzenverfügbarkeit und damit eine verbesserte Düngewirkung erzielt. In einer bevorzugten Ausführungsform der Erfindung wird die Reaktionsführung vorzugsweise so gesteuert, dass der Phosphatanteil aus dem anorganischen Sekundärphosphat anschließend im erzeugten Düngergranulat eine Neutralammoniumcitratlöslichkeit von größer als 60 % und eine Wasserlöslichkeit von kleiner als 40 %, aufweist. Durch die Einstellung der Löslichkeiten in dieser Form wird bewirkt, dass das Phosphat über etwa eine Wachstumsperiode tatsächlich auf dem Feld für die Pflanzen ausreichend gut pflanzenverfügbar ist, jedoch in dieser Zeit nicht ausgewaschen wird. Eine Auswaschung kann typischerweise erfolgen, wenn eine sehr gute Wasserlöslichkeit, also deutlich höher also hier vorgesehen, vorhanden ist. In einer besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 80 % und eine Wasserlöslichkeit von kleiner als 30 % eingestellt. Überraschenderweise hat sich gezeigt, dass dadurch insbesondere Winterroggen eine besonders günstige P-Versorgung über eine Wachstumsperiode erfährt. In einer anderen besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 90 % und eine Wasserlöslichkeit von kleiner als 15 % eingestellt. Dieses Verhältnis ist besonders günstig für Weizenpflanzen.

Durch die Art und Konzentration des Reaktionsmittels, die Reaktionsführung und Reaktionszeit kann auch Einfluss auf die Art und den Anteil der gelösten Schwermetalle genommen werden. So bewirkt beispielsweise eine höhere Säurestärke vorzugsweise einen höheren Anteil an gelösten Schwermetallen. Ein höherer Anteil an gelösten Schwermetallen ist in diesem Prozessschritt bevorzugt, da so mehr Schwermetalle im Prozessschritt f) mit der teilweisen Abtrennung der flüssigen Phase abgetrennt und der zumindest teilweise Abtrennung der Schwermetalle im Prozessschritt h) zugeführt werden können.

In einer bevorzugten Ausführungsform der Erfindung wird mindestens ein Reaktionsmittel verwendet, welches mindestens eines der Elementen Stickstoff (N), Schwefel (S), Kalium (K) und/oder Phosphor (P) umfasst, so beispielsweise phosphorige Säure (H3PO3), Phosphorsäure (H3PO4), Salpetersäure (HNO3), Schwefelsäure (H2SO4), schweflige Säure (H2SO3) und/oder Kalilauge (KOH). Durch die Verwendung derartiger Reaktionsmittel werden entsprechend zusätzlich Nährstoffkomponenten, wie Stickstoff, Schwefel, Kalium und/oder Phosphor, in das Granulat eingetragen. Durch eine geeignete Reaktionsabfolge kann vorzugsweise die Nährstoff-Bindungsform der im Reaktionsmittel enthaltenen Nährstoffe, z.B. Stickstoffs und/oder Schwefels, in eine für das Düngemittel geeignete Form umgewandelt werden.

Das Zusammenführen der Komponenten der Rohstoffdispersion kann in beliebiger Reihenfolge erfolgen. Notwendig ist im Sinne der Erfindung, dass das Reaktionsmittel im Prozessschritt a) in ausreichender Weise mit zumindest einem Teil des durch das anorganische Sekundärphosphat zugeführten Phosphates reagiert. Der Begriff in ausreichender Weise reagieren" bedeutet dabei im Sinne der Erfindung, dass sich die gewünschte Verbesserung der Neutralammoniumcitratlöslichkeit des Phosphates einstellt. Entsprechend ist im Prozessschritt a) eine Inkubationszeit im Sinne des Einwirkenlassens des Reaktionsmittels auf das anorganische Sekundärphosphat vorgesehen. Die Inkubation gemäß Prozessschritt a) erfolgt über einen Zeitraum im Bereich von 1 bis 100 Minuten, bevorzugt im Bereich von 5 bis 60 Minuten und besonders bevorzugt im Bereich von 10 bis 30 Minuten. Durch die Reihenfolge des Zusammenführens der Komponenten, der zeitlichen Abfolge und der Inkubationszeit kann beispielsweise Einfluss auf die ablaufende Reaktion und somit auch auf den Anteil der gelösten Schwermetalle und die Neutralammoniumcitratlöslichkeit des Phosphates im erzeugten Düngergranulat genommen werden.

Die vorgesehene Trennung der Reaktion zur zumindest anteiligen Phosphatumwandlung aus dem anorganischen Sekundärphosphat von den nachfolgenden Prozessschritten löst vorzugsweise das technische Problem, dass die exotherme, zum Teil spontan und heftig ablaufende Reaktion die weiterführende Prozessführung stark behindert. Die erfindungsgemäß vorgesehene Trennung der Reaktion von den nachfolgenden Prozessschritten ist dabei vorzugsweise im technischen Sinne so zu verstehen, dass im Protzessschritt a) der weitaus größte Anteil der Reaktion erfolgt. Es kann jedoch auch bevorzugt sein, dass die Reaktion auch in den anschließenden Prozessschritten noch weiter fortläuft, dann jedoch in deutlich verminderter Intensität. Durch das Einhalten der erfindungsgemäß vorgesehenen Inkubationszeit ist die noch vorhandene Intensität des möglichen Fortlaufens der Reaktion nicht mehr für die Prozessführung hinderlich. In einer bevorzugten Ausführungsform der Erfindung wird der Prozessschritt a) vorzugsweise so gesteuert, dass mehr als 80 % der über das gesamte Verfahren erreichten Neutralammoniumcitratlöslichkeits-Erhöhung des anorganischen Sekundärphosphats im Prozessschritt a) erreicht werden. Das heißt, würde man die Reaktion nach dem Prozessschritt a) durch schnelle Trocknung abstoppen, zeigt das mit dem Reaktionsmittel behandelte Phosphat aus dem anorganischen Sekundärphosphat dieses so abgestoppte Reaktionsprodukt bereits mindestens 80 % der Neutralammoniumcitratlöslichkeit eines Reaktionsproduktes, welches nicht abgestoppt wird, sondern Prozessschritt b) und c) noch durchläuft.

Der Rohstoffdispersion können im Prozessschritt a) weitere Komponenten zugegeben werden. Weitere Komponenten sind hier allgemein solche Stoffe, die die Prozessführung und/oder die Eigenschaften der Düngegranulate verbessern können, so beispielsweise nährstoffhaltige Komponenten, Dispergier- und Entschäumungsmittel, Strukturstoffe, Mittel zur pH-Werteinstellung, Urease-Hemmer, Ammonium-Stabilisatoren, Huminsäure, organische Säuren und/oder Wasser.

Der pH-Wert der erzeugten Rohstoffdispersion kann während oder nach der Inkubationszeit bei Bedarf eingestellt werden. In einer bevorzugten Ausführungsform wird der pH-Wert zwischen 1-2 eingestellt, da in diesem Bereich das gelöste Phosphat noch weitgehend gelöst bleibt. In einer anderen bevorzugten Ausführungsform erfolgt eine pH-Werteinstellung der Rohstoffdispersion für Prozess-Strang B über einen pH-Wert von 2, wobei das gelöste Phosphat zumindest ausgefällt wird. Besonders bevorzugt erfolgt die Einstellung des pH-Werts der Rohstoffdispersion für Prozess-Strang B auf einen Wert über 3, da dadurch das gelöste Phosphat besonders gut ausfällt. In einer ganz besonderen Ausführungsform wird der pH-Wert derart eingestellt, dass das mehr als 90 % des gelösten Phosphats ausfallen. Dadurch wird die teilweise Abtrennung der flüssigen Phase in Prozessschritt f) aufgrund der geringeren gelösten Anteile vereinfacht.

Somit sind in Ausführungsformen der Erfindung das erfindungsgemäße phosphatangereicherte, schwermetallabgereicherte Düngergranulat (11) und/oder das erfindungsgemäße Verfahren dadurch gekennzeichnet, dass die Zugaben des mindestens einen Schwermetallfällungsmittels und die Schwermetallfällung bei einem pH-Wert kleiner 2 durchgeführt wird und die Abtrennung eines Teils der phosphathaltigen, schwermetallarmen flüssigen Phase (5) der Rohstoffdispersion und Ausschleusen des übrigen schwermetallhaltigen Filterkuchens (6) aus dem Prozess ebenfalls bei pH-Wert kleiner 2 erfolgen.

Die für jeweils Prozess-Strang A und Prozess-Strang B bereitgestellte Menge an Rohstoffdispersion und damit an anorganischem Sekundärphosphat (Teilstrom) wird beispielsweise nach den Anforderungen an die Produktqualität des erzeugten Düngers und/oder aus wirtschaftlichen Erwägungen eingestellt. Anders als bei Verfahren aus dem Stand der Technik kann durch die erfindungsgemäße, flexibel einstellbare Menge der Teilströme der Prozess auch bei unterschiedlicher bzw. schwankender chemischer Konstitution der anorganischen Sekundärphosphate so gesteuert werden, dass er besonders wirtschaftlich ist und dabei dennoch die Qualitätsanforderungen beispielsweise bei den Grenzwerten an Schwermetallen einhält.
▪ Erfindungsgemäß können im Prozess-Strang A auch die bei der Reaktion zwischen anorganischen Sekundärphosphat und Reaktionsmittel nicht gelösten Schwermetalle weitgehend abgetrennt werden, während im Prozess-Strang B (nur) eine Abtrennung der gelöst vorliegenden Schwermetalle im Prozessschritt h) erfolgen kann. So kann durch die Einstellung der im Prozess-Strang A und Prozess-Strang B zugeführten Menge an anorganischem Sekundärphosphat nicht nur eine Gesamtabreicherungsrate an Schwermetallen sondern auch gezielt eine Abreicherungsrate von besonders problematischen Schwermetallen, die beispielsweise die Grenzwerte überschreiten, eingestellt werden. So kann beispielsweise über die dem Prozess-Strang A zugeführte Teilstrommenge an anorganischem Sekundärphosphat Einfluss auf die Abreicherungsmenge an den Schwermetallen genommen werden, die durch das Reaktionsmittel nicht gelöst werden.
▪ Im Prozess-Strang A entsteht (wie bei Leaching-Verfahren typisch) ein unlöslicher Rückstand, der in der Regel als Abfall zu entsorgen ist. Im Prozess-Strang B fällt hingegen kein solcher Prozessrückstand an. Durch die Art der Aufteilung der Menge des anorganischen Sekundärphosphates auf Prozess-Strang A bzw. B wird Einfluss auf die Menge an diesem Rückstand genommen. Anders als bei bekannten Leaching-Verfahren aus dem Stand der Technik wird jedoch erfindungsgemäß dem Prozess-Strang B immer ein Teilstrom des anorganischen Sekundärphosphates zugeführt. Dadurch ist die Menge an Prozessrückstand aus dem Gesamtprozess kleiner, was nicht nur kostengünstiger ist. Sondern die im Prozess-Strang B mit in das Düngemittel überführten Begleitkomponenten aus dem anorganischen Sekundärphosphat enthalten zum Teil zusätzliche, für die Pflanze benötigte Nähr- und Spurenstoffe. Dies spart den Zusatz solcher Komponenten aus konventioneller Herstellung und macht das Verfahren nicht nur wirtschaftlicher, sondern auch nachhaltiger.
▪ Im Prozess-Strang A wird das anorganische Sekundärphosphat in ein hochkonzentriertes Phosphat überführt. Durch die erfindungsgemäße Überführung dieses hochkonzentrierten Phosphats in das herzustellende Düngemittel (Prozessschritt g) wird der Phosphatgehalt im erzeugten Dünger erhöht. Je nach Aufteilung des anorganischen Sekundärphosphats auf die Prozess-Stränge A und B kann so eine einstellbare, in jedem Fall höhere P-Konzentration als im anorganischen Sekundärphosphat im Düngemittel bereits ohne die Zuführung eines zusätzlichen Phosphates als Nährstoffkomponente erreicht werden, als sich allein aus Prozess-Strang B ergeben würde. Dies ist wirtschaftlich vorteilhaft, da Phosphat-Nährstoffkomponenten teuer und zunehmend schlechter verfügbar sind.

Diese resultierende Phosphatkonzentration im erzeugten Dünger kann im erfindungsgemäßen Verfahren überaschenderweise über die Einstellung der Teilstrommengen für Prozess-Strang A und B erfolgen. Erfindungsgemäß wird ein phosphatangereicherter Dünger erzeugt, wobei die Phosphatkonzentration des erzeugten Düngemittels, bezogen allein auf das Phosphates zugeführt mit dem anorganischen Sekundärphosphat, höher ist, als die Phosphatkonzentration im zugeführten anorganischen Sekundärphosphat selbst. In einer besonders bevorzugten Ausführungsform wird das mindestens eine anorganische Sekundärphosphat so auf die Teilstrommengen aufgeteilt, dass im erzeugten Düngergranulate eine um mindestens 30 % höhere Phosphatkonzentration, bezogen allein auf das Phosphate zugeführt mit dem anorganischen Sekundärphosphat, resultiert, als im zugeführten anorganischen Sekundärphosphat. Dadurch resultiert ein besonders phosphatreicher Düngergranulat, der sich beispielsweise zur weiteren Konfektionierung mit anderen Nährstoffen eignet. Enthält also beispielsweise in dieser Ausführungsform das eingesetztes anorganisches Sekundärphosphat 7 % P2O5 als Phosphat, wird dieses anorganische Sekundärphosphat so auf den Prozess-Strang A und B aufgeteilt, dass ein Düngergranulat mit mehr als 9,1 % P2O5 als Phosphat (bezogen auf Phosphat nur aus dem anorganischen Sekundärphosphat) resultiert. Werden mehrere anorganischen Sekundärphosphate gleichzeitigt eingesetzt, ergibt sich eine mittlere Phosphatkonzentration für das anorganische Sekundärphosphat und die Berechnungsform analog verstehend daraus.

Somit sind Ausführungsformen des erfindungsgemäßen phosphatangereicherten, schwermetallabgereicherten Düngergranulats (11) und/oder des erfindungsgemäßen Verfahrens dadurch gekennzeichnet, dass das phosphatangereicherte, schwermetallabgereicherte Düngergranulat (10) eine mindestens 30 % höhere Phosphatkonzentration als das oder die zugeführte(n) anorganische(n) Sekundärphosphat(e) aufweist.

Erfindungsgemäß erfolgt im Verfahren eine Schwermetallabreicherung. Überaschenderweise kann bevorzugt dabei die Abreicherung von mindestens 20 % der insgesamt durch das oder die anorganischen Sekundärphosphat(e) zugeführten Menge an Schwermetalle (Summe alle Schwermetalle) erreicht werden, besonders bevorzugt die Abreicherung von mehr als 30 % der insgesamt durch das anorganischen Sekundärphosphat zugeführten Menge an Schwermetalle, wodurch weniger Schwermetalle durch das erzeugte Düngemittel in die Umwelt bei der Dünung ausgetragen werden.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass das phosphatangereicherte, schwermetallabgereicherte Düngergranulat (10) eine mindestens 20 % geringere Schwermetallkonzentration in Summe als das oder die zugeführte(n) anorganische(n) Sekundärphosphat(e) aufweist.

Problematisch bei Verfahren aus dem Stand der Technik wie beispielsweise WO 2019/149405 A1 ist, dass nur die Schwermetalle abgetrennt werden können, die zuvor durch das Reaktionsmittel in Lösung gegangen sind.

Im erfindungsgemäßen Verfahren können überaschenderweise im Prozess-Strang A auch diese nicht durch das Reaktionsmittel gelösten Schwermetalle abgetrennt werden. In einer bevorzugten Ausführungsform wird das mindestens eine anorganische Sekundärphosphat so auf die Teilstrommengen aufgeteilt, dass im erzeugten Düngergranulate eine Abreicherung der durch das anorganischem Sekundärphosphat zugeführten und nicht durch das Reaktionsmittel gelösten Schwermetalle um mindestens 30 % resultiert. Die Abreicherung dieser Schwermetalle erfolgt dabei im Wesentlichen in dem erfindungsgemäßen Prozess-Strang A. Werden also beispielsweise 100 mg/kg einer durch das anorganische Sekundärphosphat dem Prozess zugeführten Schwermetallsorte (z.B. Pb) nicht durch das Reaktionsmittel gelöst, werden davon mindesten 30 mg/kg aus dem Prozess abgeschieden und damit nicht in das Düngemittelgranulat überführt. Für viele anorganische Sekundärphosphate ist die Abtrennung einer derartigen Menge an Schwermetallen ausreichend, um die Grenzwerte für ein gesetzeskonformes Düngemittel zu unterschreiten. In einer anderen bevorzugten Ausführungsform wird analog mindestens 50 % dieser nicht gelösten Schwermetalle aus dem Prozess ausgeschleust. Diese Ausführungsform ist beispielsweise dann erforderlich, wenn das anorganische Sekundärphosphat eine besonders hohe Schwermetallkonzentration an dieser Art von Schwermetallen aufweist und diese Ausführungsform ist besonders nachhaltig, da dadurch durch das erzeugte Düngemittel weniger Schwermetalle durch die Landwirtschaft eingetragen werden.

**Im Prozessschritt b)** erfolgt die Zugabe eines Schwermetallfällungsmittels zur erzeugten und dem Prozessschritt b) im Prozess-Strang A zugeführten Rohstoffdispersion während der Inkubationszeit und/oder nach der Inkubationszeit.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass mindestens ein Schwermetallfällungsmittel während der Inkubationszeit zugegeben wird.

Unter Schwermetallfällungsmittels sind dabei erfindungsgemäß die Stoffe zu verstehen, die gelöst vorliegende Schwermetalle in der Rohstoffdispersion ausfällen oder auskristallisieren können, heißt, von der gelösten Phase in die feste Phase überführen können. Derartige Schwermetallfällungsmittel können dabei beispielsweise Stoffe sein, welche den pH-Wert der Rohstoffdispersion anhebt, wobei die gelösten Schwermetalle zumindest anteilig ausfallen. Beispiele für derartige Stoffe sind Laugen wie NaOH, KOH oder basische Stoffe wie CaO, MgO, Mg(OH)2 oder Ca(OH)2. Schwermetallfällungsmittel können aber auch beispielsweise Stoffe sein, die mit dem gelösten Schwermetall reagieren und als Verbindung zumindest anteilig ausfallen. Beispiel für diese Art von Stoffen sind Sulfide wie beispielsweise H2S, CH4N2S, Na2S, die mit den Schwermetallen zu Schwermetallsulfiden reagieren. Ein Schwermetallfällungsmittel im Sinne der Erfindung kann auch ein sogenanntes Opfermetall sein. Als Opfermetall wird im Sinne der Erfindung bevorzugt ein unedleres Metall als die abzutrennenden Schwermetalle bezeichnet, beispielsweise ausgewählt aus der Gruppe von Aluminium, Eisen und Zink oder Mischungen daraus. Tritt das Opfermetall mit den gelösten Schwermetallen in Kontakt, findet vorteilhafterweise eine Reduktion der gelöst vorliegenden edleren Metalle auf der Oberfläche des unedleren Opfermetalls statt, das dabei oxidiert wird und dadurch zumindest anteilig in den festen Zustand übergeht. Die reduktiven Bedingungen können durch die Zugabe eines geeigneten Reduktionsmittels ausgelöst oder verstärkt werden.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass mindestens ein zugegebenes Schwermetallfällungsmittel ein Sulfid ist.

Erfindungsgemäß werden durch die Zugabe des Schwermetallfällungsmittels die in dem Prozessschritt b) zugeführten Rohstoffdispersion gelöst vorliegenden Schwermetalle zumindest anteilig in die feste Phase überführt. Dies ermöglicht die Abtrennung dieser dann als ungelöst vorliegender Schwermetalle durch eine einfache Fest-Flüssig-Trennung in Prozessschritt c).

Bevorzugt werden durch das Schwermetallfällungsmittel mehr als 50 %, besonders bevorzugt mehr als 70 % der in der zugeführten Rohstoffdispersion gelöst vorliegenden Schwermetalle in die feste Phase überführt. Da durch die notwendige Reaktion zwischen anorganischem Sekundärphosphat und Reaktionsmittel relevante Anteile an Schwermetallen, bei Klärschlammaschen beispielsweise typischerweise insbesondere Cd oder As, gelöst werden, sind derartige Abscheideraten erforderlich, um die geforderten Grenzwerte im erzeugten Düngemittel einzuhalten. In einer besonders bevorzugten Ausführungsform werden durch das Schwermetallfällungsmittel mehr als 80 % der in der zugeführten Rohstoffdispersion gelöst vorliegenden Schwermetalle in die feste Phase überführt, wodurch ein Düngergranulat mit besonders niedrigen Schwermetallkonzentration resultiert.

Zur Erhöhung der Wirksamkeit des Schwermetallfällungsmittels kann die Rohstoffdispersion im Prozessschritt a) und/oder Prozessschritt b) konditioniert werden. Konditioniert bedeutet dabei, dass die Eigenschaften der Rohstoffdispersion bzw. das Reaktionsmilieu hinsichtlich einer verstärkten ausfällenden Wirkung der Schwermetalle verbessert wird. Eine derartige Konditionierung kann beispielsweise die Einstellung des pH-Werts, der Temperatur, des Redox-Potentials oder der Konzentration der gelöst vorliegenden Stoffe sein.

In einer bevorzugten Ausführung sind mehr als 80 % P2O5 aus dem Prozessschritt b) zugeführten anorganischen Sekundärphosphat gelöst und die Zugabe des Schwermetallfällungsmittels und die Überführung der Schwermetalle in die feste Phase erfolgen bei pH-Werten kleiner 2. In diesem Bereich liegt das gelöste Phosphat auch ohne vorherige Komplexierung weitgehend gelöst vor. Bevorzugt wird als Schwermetallfällungsmittel ein oder mehre Sulfid(e) wie beispielsweise H2S, CH4N2S, Na2S. Durch die zugeführten Sulfide werden die gelösten Schwermetalle zumindest anteilig als Schwermetallsulfide ausgefällt. Überraschender Weise wurde festgestellt, dass in einer besonders bevorzugten Ausführungsform mehr als 80 % der insgesamt gelöst vorliegenden Schwermetalle durch Sulfid(e) als Schwermetallfällungsmittels auch bereits in diesem niedrigen pH-Wertbereich kleiner 2 ausgefällt werden können, wobei das in der Rohstoffdispersion ebenfalls gelöst vorliegende Phosphat danach weiterhin mit mehr als 80 % (bezogen auf den zuvor gelösten Anteil) weiterhin gelöst vorliegt. Liegen also beispielsweise in Summe 100 mg Schwermetalle (z.B. als Summe aus Cd, As, Cu) und 5 g P2O5 in der Rohstoffdispersion gelöst vor, sind nach der Zugabe von Sulfid(en) als Schwermetallfällungsmittel und der Fällungsreaktion weniger als 20 mg in Summe Schwermetall und mehr als 4 g P2O5 gelöst.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass aus der Rohstoffdispersion durch das zugegebene mindestens eine Schwermetallfällungsmittel (4) mehr als 80 % der insgesamt gelöst vorliegenden Schwermetalle ausgefällt werden, wobei nach der Schwermetallfällung mindestens 80 % des zuvor gelöst vorliegendem P2O5 in der Rohstoffdispersion weiterhin gelöst vorliegen.

In einer bevorzugten Ausführungsform erfolgt die Zugabe der oder des Sulfid(s/e) im pH-Wertbereich kleiner 1. Überraschender Weise wurde festgestellt, dass die gewünschte Fällung der Schwermetalle durch Sulfide in dem Reaktionsmilieu der Rohstoffdispersion auch in diesen sehr niedrigen pH-Werten ausreichend quantitativ erfolgt. Vorteil ist dabei, dass so die Zugabe des Sulfids bereits während der Inkubationszeit bzw. bei noch fortlaufender Reaktion zwischen anorganischem Sekundärphosphat und Reaktionsmittel erfolgen kann. Dadurch laufen die Reaktion zwischen anorganischem Sekundärphosphat und Reaktionsmittel, sowie zwischen Schwermetallfällungsmittel und gelösten Schwermetallen zumindest zeitweilig gleichzeitig ab, was die Gesamtprozesszeit verkürzt oder bei gleicher Gesamtprozesszeit eine jeweils längere Reaktionszeit ermöglicht. In einer anderen bevorzugten Ausführungsform erfolgt die Zugabe der oder des Sulfid(e/s) im pH-Wertbereich zwischen 1 bis 2. Vorteil dieser Ausführungsform ist, dass die Fällung durch Sulfid in diesem pH-Bereich effizienter als im pH-Wertbereich kleiner 1 ist, also eine höhere Menge an Schwermetallen ausgefällt wird. Gleichzeit verbleibt das gelöste Phosphat weitgehend in gelöster Form.

**Im Prozessschritt c)** des vorgeschlagenen Verfahrens wird aus der im Prozessschritt a) erzeugten und dem Prozess-Strang B zugeführten Rohstoffdispersion ein Teil der phosphathaltigen, schwermetallarmen flüssigen Phase aus der zugeführten Rohstoffdispersion abgetrennt und der resultierende schwermetallhaltige Filterkuchen aus dem Prozess ausgeschleust.

Es ist dabei bevorzugt, in diesem Prozessschritt so viel phosphathaltige, schwermetallarme flüssige Phase abzutrennen, dass die Feuchte im schwermetallhaltigen Filterkuchen kleiner 50 % ist. Durch die Abtrennung eines solchen Anteils an flüssiger Phase in der das Phosphat gelöst vorliegt, kann ein erheblicher Anteil Phosphat für den weiteren Prozess und damit eine wirtschaftlich interessante Ausbeute an Phosphat erreicht werden. In einer besonders bevorzugten Ausführungsform wird so viel phosphathaltige, schwermetallarme flüssige Phase abgetrennt, dass die Feuchte im schwermetallhaltigen Filterkuchen kleiner 40 % ist. Dadurch muss vorteilhafter Weise weniger Wasser aus dem schwermetallhaltigen Filterkuchen durch Trocknung vor einer Deponierung entfernt werden, was kostengünstiger ist.

Die teilweise Abtrennung der flüssigen Phase im Sinne der vorliegenden Erfindung kann kontinuierlich und/oder diskontinuierlich in einem oder mehreren Schritten erfolgen, beispielsweise durch Filtrieren oder Zentrifugieren. Die Filtration kann diskontinuierlich zum Beispiel mittels Autopress, Drucknutschen, Rührdrucknutschen, Saugnutschen, Tellerfilter, (Druck)Blattfilter, Beutelfilter, Kerzenfilter, Schlauchfilter, Schichtenfilter, Filterpressen, wie z.B. Rahmenfilterpressen, Kammerfilterpressen, Membranfilterpressen; Plattenfilter und/oder Schüttungsfilter oder kontinuierlich, zum Beispiel mittels Crossflow-Filtration, Scherspaltfilter, Tubular-Rotorfilter, Bandfilter, Druckdrehfilter, Trommelfilter, Vakuumdrehfilter, Scheibendruckfilter und/oder Schiebbandpresse erfolgen, ohne darauf beschränkt zu sein. Das Zentrifugieren kann kontinuierlich durch zum Beispiel Siebzentrifugen, Siebschneckenzentrifungen, Prallringzentrifungen, Gleitzentrifugen, Schubzentrifugen, Schwingzentrifungen, Taumelzentrifugen und/oder Vollmantelzentrifugen oder diskontinuierlich zum Beispiel durch Hängependelzentrifugen, Horizontalschälzentrifungen, Stülpfilterzentrifungen, Schubbeutelzentrifungen und/oder Vertikalzentrifugen erfolgen. Es ist im Sinne der Erfindung bevorzugt, dass die Fest-Flüssigtrennung mittels Filterpressen oder Vakuumbandfilter durchgeführt wird.

Bei der teilweisen Abtrennung der flüssigen Phase ist es vorzugsweise nicht zwingend erforderlich, dass alle festen Bestandteile aus der abgetrennten flüssigen Phase vollständig abgetrennt werden. Insbesondere sehr feine feste Partikel, die im Sinne der Erfindung vorzugsweise als Schwebpartikel bezeichnet werden, können vorzugsweise in der abgetrennten Phase verbleiben. Dies vereinfacht zum einen den Abtrennprozess, beispielsweise bei Filtration oder Zentrifugation, da insbesondere die vollständige Abtrennung von feinen Partikeln bei einer Fest-Flüssig-Trennung mit hoher Feststoffbeladung sehr aufwendig ist. Bevorzugt wird deshalb, dass in der abgetrennten flüssigen Phase ein Feststoffgehalt von kleiner als 10 %, besonders bevorzugt kleiner als 5 % und ganz besonders bevorzugt kleiner als 2 % eingestellt wird.

**Im Prozessschritt d)** des vorgeschlagenen Verfahrens erfolgt die zumindest anteilige Ausfällung des gelöst vorliegenden Phosphates in der im Prozessschritt c) abgetrennten flüssigen Phase, heißt, die zumindest anteilige Überführung des gelösten Phosphates in die feste Phase.

Die Ausfällung des gelöst vorliegenden Phosphates kann mittels des dem Fachmann bekannten Verfahrens erfolgen. Dabei kann es vorteilhaft sein, dass die abgetrennte flüssige Phase zuvor oder währenddessen konditioniert wird, beispielsweise indem eine gewünschte Prozesstemperatur eingestellt wird oder der flüssigen Phase Stoffe wie Entschäumungsmittel oder Dispergatoren zugeführt werden, die deren physikalisch-chemischen Eigenschaften verändert.

In einer bevorzugten Ausführungsform erfolgt die Ausfällung des gelösten Phosphates in der im Prozessschritt c) abgetrennten flüssigen Phase mittels pH-Werterhöhung. Die abgetrennte flüssige Phase weist bevorzugt einen pH-Wert kleiner 2 auf. Wird der pH-Wert, wie in dieser bevorzugten Ausführungsform vorgesehen erhöht, fällt das gelöste Phosphat zumindest anteilig aus. Der pH-Wertbereich dieser Ausfällung von Phosphat hängt dabei beispielsweise davon ab, welche Art von Phosphat (beispielsweise Aluminiumphosphat, Eisenphosphat, Calciumphosphat) dabei gebildet werden kann. In dieser bevorzugten Ausführungsform wird dazu der abgetrennten flüssigen Phase ein Stoff zugegeben, der den pH-Wert dieser abgetrennten flüssigen Phase vorzugsweise über 2 hebt. In einer besonders bevorzugten Ausführungsform wir der pH-Wert in einem Bereich zwischen 2-4 eingestellt. In diesem pH-Wertbereich findet typischerweise eine ausreichend quantitative Fällung, bevorzugt mehr als 80 % des gelösten Phosphates, statt. In einer ganz besonders bevorzugten Ausführungsform erfolgt die Fällung des Phosphates im pH-Bereich von 2 bis 3. Vorteil dieser Ausführungsform ist dabei, dass nach der Abtrennung des gefällten Phosphates (Prozessschritt e)) eine (phosphatarme) flüssige Phase resultiert, die einen vergleichsweise niedrigen pH-Wert aufweist. Für eine mögliche Rückführung dieser abgetrennte flüssigen Phase zum Prozessschritt a) zur Herstellung einer Rohstoffdispersion ist es dabei vorteilhaft, wenn der pH-Wert bereits niedrig ist, da dadurch beispielsweise weniger Säure eingesetzt werden muss.

Zur Anhebung bzw. Einstellung des pH-Wertes können all die Stoffe oder Stoffgemische eingesetzt werden, die den pH-Wert in gewünschter Weise beeinflussen. In einer bevorzugten Ausführungsform wird der abgetrennten flüssigen Phase mindestens ein NaOH oder Natronlauge zugeführt, die zur Anhebung des pH-Wertes führt. NaOH bzw. Natronlauge ist kostengünstig und ist in ausreichend großen Mengen verfügbar. In einer anderen bevorzugten Ausführungsform wird der abgetrennten flüssigen Phase mindestens eine Kalziumverbindung, wie beispielsweise CaO oder Ca(OH)2, zugeführt, die zur Anhebung des pH-Wertes führt. Vorteil dieser Ausführungsform ist, dass derartige Verbindungen zumeist kostengünstig verfügbar sind und sich gegebenenfalls zumindest anteilig Ca-Phosphate bei der Ausfällung ausbilden. Ca-Phosphatverbindungen als Fällungsprodukte weisen eine sehr gute Düngewirkung auf. In einer anderen bevorzugten Ausführungsform wird der abgetrennten flüssigen Phase eine Kaliumverbindung, wie beispielsweise KOH, zugeführt, die zur Anhebung des pH-Wertes führt. Vorteil ist dabei, dass Kalium ein wichtiger Nährstoff für Pflanzen ist und das zugegebene Kalium zumindest anteilig mit dem ausgefällten und im Prozessschritt e) abgetrennten Phosphat aus der Lösung getrennt wird. Dadurch enthält das ausgefällte Phosphat Kalium als zusätzlichen Nährstoff.

Bevorzugt ist, dass durch die Ausfällung des Phosphates mindestens 80 % des zuvor gelöst vorliegenden Phosphates ausgefällt werden. In diesem Bereich kann bereits eine wirtschaftlich sinnvolle Phosphatgewinnung in diesem Prozess-Strang A erfolgen. Besonders bevorzugt ist die Ausfällung von mehr als 90 % des zuvor gelöst vorliegenden Phosphates. Dies verbessert den wirtschaftlichen Betrieb des Verfahrens deutlich.

**Im Prozessschritt e)** des vorgeschlagenen Verfahrens wird das ausgefällte Phosphat zumindest anteilig von zumindest einem Teil der flüssigen Phase abgetrennt. Die abgetrennte flüssige Phase wird bevorzugt zumindest anteilig in den Prozessschritt a) zur Herstellung einer Rohstoffdispersion zurückgeführt. Das abgetrennte ausgefällte Phosphat wird zumindest anteilig Prozessschritt g) zur Herstellung des erfindungsgemäßen Düngemittels zugeführt.

Die mindestens anteilige Abtrennung des gefällten Phosphates im Sinne der vorliegenden Erfindung kann kontinuierlich und/oder diskontinuierlich in einem oder mehreren Schritten erfolgen, beispielsweise durch Filtrieren oder Zentrifugieren. Dazu können beispielsweise die im Prozessschritt c) zur Abtrennung der flüssigen Phase dort aufgeführten Verfahren und Technologien grundsätzlich verwendet werden.

Bevorzugt ist eine resultierende Feuchte im abgetrennten, gefällten Phosphat weniger 60 %. In einer bevorzugten Ausführungsform beträgt die Feuchte nach der Abtrennung weniger als 50 %. Vorteil dieser Ausführungsform ist, dass dadurch eine geringere Menge an physikalisch gebundenem Wasser (Feuchte) dem Prozessschritt g) zugeführt wird, welches im Anschluss aus den erzeugten Düngergranulaten vorzugsweise thermisch kostenaufwendig abgetrennt werden, damit eine gewünschte niedrige Restfeuchte im Düngergranulat resultiert.

Die dem Prozessschritt d) zugeführte flüssige Phase enthält neben dem gelösten Phosphat auch weitere gelöste Begleitkomponenten. Diese Begleitkomponenten werden durch die Reaktion zwischen anorganischem Sekundärphosphat und Reaktionsmittel mit oder gleichzeitig in Lösung überführt und werden vorzugsweise zumindest anteilig nicht vor Prozessschritt d) abgetrennt. Bevorzugt werden diese Begleitkomponenten im Prozess e) mit dem ausgefällten Phosphat zumindest anteilig mit abgetrennt. Dazu können die gelösten Begleitkomponenten mit dem Phosphat oder davon separat zumindest anteilig mit ausfallen oder gezielt ausgefällt werden. Oder sie werden zumindest anteilig mit dem am ausgefällten Phosphat anhaftenden, physikalisch gebundenen Wasser (Feuchte), in dem sie gelöst vorliegen, mit abgetrennt. Dadurch werden diese Begleitkomponenten mit dem ausgefällten Phosphat zumindest anteilig in das Düngemittel im Prozess-Strang B überführt und fallen nicht als Abfall an, was einen deutlichen Vorteil dieser Ausführungsform darstellt.

Erfolgt die bevorzugte, zumindest anteilige Rückführung der abgetrennten, flüssigen Phase zu Prozessschritt a) über mehrere Zyklen bei gleichbleibender Prozessführung, stellt sich ein Gleichgewichtskreislauf mit einer Gleichgewichtskonzentration an gelösten Komponenten in diesem Teilkreislauf ein. Durch die am abgetrennten Filterkuchen anhaftende Restfeuchte werden dabei gelöste Komponenten entsprechend der sich einstellenden Gleichgewichtskonzentration ausgetragen.

**Im Prozessschritt f)** des vorgeschlagenen Verfahrens wird aus der im Prozessschritt a) erzeugten und dem Prozess-Strang B zugeführten Rohstoffdispersion ein Teil der flüssigen Phase abgetrennt und anschließend Prozessschritt h) zugeführt. Der verbleibende Rückstand aus dem festen und/oder ungelösten Anteil der Rohstoffsuspension mit dem verbleibenden Anteil der flüssigen Phase, die nicht abgetrennt wurde, wird dem Prozessschritt g) zugeführt.

Die Menge an abzutrennender flüssiger Phase in diesem Prozessschritt wird ausgewählt nach den Erfordernissen der anschließenden Granulation oder Extrusion im Prozessschritt g) und/oder den Erfordernissen bei einer optionalen zumindest teilweisen Schwermetallabtrennung in Prozessschritt h). So entscheidet beispielsweise die Art der gewünschten Granulierung über den abzutrennenden Anteil an flüssiger Phase.

In einer besonders bevorzugten Ausführungsform beträgt die aus der teilweisen Abtrennung der flüssigen Phase resultierende Feuchte 10 % bis weniger 40 %. Mit anderen Worten ist es im Sinne der Erfindung bevorzugt, dass die Feuchte in einem Bereich zwischen 10 und 40 % liegt. Vorteil einer solch eingestellten Feuchte ist, dass eine Mischung mit diesem Feuchtegehalt (auch als "erdfeuchte Mischung" bezeichnet) direkt granuliert oder extrudiert werden kann und verhältnismäßig wenig flüssige Phase, beispielsweise insbesondere Wasser, zur Erzeugung des insbesondere trockenen Düngemittelgranulats verdampft werden muss. Dies spart erhebliche Energiekosten. In einer besonders bevorzugten Ausführungsform wird die resultierende Feuchte 10 % bis weniger 30 % eingestellt. Vorteil dieser Ausführungsform der Erfindung ist es, dass ein Gemisch mit diesem Feuchtegehalt typischerweise direkt mittels Granulierteller granulierbar ist.

Die teilweise Abtrennung der flüssigen Phase im Sinne der vorliegenden Erfindung kann kontinuierlich und/oder diskontinuierlich in einem oder mehreren Schritten erfolgen, beispielsweise durch Filtrieren oder Zentrifugieren. Dazu können beispielsweise die im Prozessschritt c) zur Abtrennung der flüssigen Phase dort aufgeführten Verfahren und Technologien grundsätzlich verwendet werden.

Bei der teilweisen Abtrennung der flüssigen Phase ist es vorzugsweise nicht zwingend erforderlich, dass alle festen Bestandteile aus der abgetrennten flüssigen Phase vollständig abgetrennt werden. Insbesondere sehr feine feste Partikel, die im Sinne der Erfindung vorzugsweise als Schwebpartikel bezeichnet werden, können vorzugsweise in der abgetrennten Phase verbleiben. Dies vereinfacht zum einen den Abtrennprozess, beispielsweise bei Filtration oder Zentrifugation, da insbesondere die vollständige Abtrennung von feinen Partikeln bei einer Fest-Flüssig-Trennung mit hoher Feststoffbeladung sehr aufwendig ist. Zum anderen können diese feinen Partikel bzw. Schwebpartikel, im Prozessschritt h) bei der optionalen zumindest teilweisen Abtrennung der Schwermetalle vorteilhaft genutzt werden, zum Beispiel als Keim- bzw. Kristallisationsbildner. Gelangt jedoch ein zu hoher Anteil an ungelösten Feststoffen in die abgetrennte flüssige Phase und damit in den Prozessschritt h), kann dies dann auch nachteilig sein, beispielsweise dann, wenn diese eingetragenen Feststoffe im Prozessschritt h) mit den Schwermetallen abgetrennt werden. Hohe Anteile an Feststoffen erhöhen dann dabei den verbleibenden schwermetallhaltigen Reststoff. Bevorzugt wird deshalb, dass in der abgetrennten flüssigen Phase ein Feststoffgehalt von kleiner als 10 %, besonders bevorzugt kleiner als 5 % und ganz besonders bevorzugt kleiner als 2 % eingestellt wird.

**Im Prozessschritt g)** wird eine Mischung aus mindestens einem Teil des im Prozess-Strang A erzeugten und in Prozessschritt e) abgetrennten ausgefällten Phosphates und mindestens einem Teil der verbleibenden Rohstoffdispersion mit reduzierter flüssiger Phase aus Prozessschritt f) erzeugt, die anschließend einer Granulierung und/oder Extrudierung zugeführt wird.

Das Mischgerät zur Erzeugung der Mischung kann beispielsweise ein Mischbehälter mit Rührwerk, Wälzmischer, der vorzugsweise auch als Fall-, Trommel- oder Rotationsmischer bezeichnet wird, Schermischer, Zwangsmischer, Pflugscharmischer, Planeten-Mischkneter, Z-Kneter, Sigma-Kneter, Fluidmischer oder Intensivmischer sein. Die Auswahl des geeigneten Mischers hängt insbesondere von der Rieselfähigkeit und von den Kohäsionskräften des Mischgutes ab.

Es ist im Sinne der Erfindung bevorzugt, dass dem Gemisch aus in Prozessschritt e) abgetrennten ausgefällten Phosphat und der Rohstoffdispersion mit reduzierter flüssiger Phase aus Prozessschritt f) weitere Komponenten vor, während oder nach der Mischung zugegeben werden können. Durch die gezielte Einstellung der Art und der Zusammensetzung des daraus resultierenden Gemischs sowie der Art und der Intensität des Mischens kann vorteilhafterweise Einfluss auf die noch weiter ablaufende Reaktion und somit auf die Neutralammoniumcitratlöslichkeit des Phosphates, aber auch auf weitere Düngereigenschaften genommen werden.

In einer besonders bevorzugten Ausführungsform der Erfindung werden zusätzliche Phosphatträger als weitere Komponente, zum Beispiel Ammoniumphosphat, Kaliumphosphat, Kristallisationsprodukte aus der Phosphorelimination, wie Struvit, Brushit oder hydroxyxlapatitähnliche Ca-P-Phase, in einer Menge zugegeben, dass dadurch ein Düngergranulat mit einem Gesamt-P2O5-Gehalt von größer als 35 %, besonders bevorzugt größer als 40 % und einem neutral-ammoniumcitratlöslichen Phosphatanteil davon von größer als 80 %, besonders bevorzugt von größer als 90 % resultiert. In einer anderen bevorzugten Ausführungsform der Erfindung werden Kristallisationsprodukte aus der Phosphorelimination, wie Struvit, Brushit oder hydroxyxlapatitähnliche Ca-P-Phase, in einem Bereich von 1 bis 70 %, bezogen auf das fertige erfindungsgemäße Düngegranulat, so zugegeben, dass dadurch ein Nährstoff- oder Düngegranulat mit einem Gesamt-P2O5-Gehalt von größer als 15 %, einem neutral-ammoniumcitratlöslichen Phosphatanteil von größer 60% davon und einer Wasserlöslichkeit von kleiner als 30%, ebenfalls bezogen auf dem Gesamt-P2O5-Gehalt resultiert. In einer ganz besonderen Ausführungsform der Erfindung werden Kristallisationsprodukte aus der Phosphorelimination im Bereich von 10 bis 40 %, bezogen auf das fertige erfindungsgemäße Düngegranulat, zugegeben, wobei Nährstoffgranulate mit einem Gesamt-P2O5-Gehalt von größer als 15 %, mit einem neutral-ammoniumcitratlöslichen Phosphatanteil davon, bezogen auf Gesamt-P2O5, von größer als 85 % und einem wasserlöslichen Phosphatanteil, bezogen auf Gesamt-P2O5, von kleiner als 20 % jeweils auf die Zusammensetzung des Nährstoffgranulates bezogen resultieren.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass mindestens ein zusätzlicher Phosphatträger, ausgewählt aus der Gruppe umfassend Ammoniumphosphat, Kaliumphosphat und Kristallisationsprodukte aus der Phosphorelimination, wie Struvit, Brushit oder hydroxyxlapatitähnliche Ca-P-Phase, in einem Bereich von 1 bis 70 %, bezogen auf das fertige erfindungsgemäße Düngegranulat, so zugegeben wird, dass dadurch ein Düngergranulat mit einem Gesamt-P2O5-Gehalt von größer als 15 %, einem neutral-ammoniumcitratlöslichen Phosphatanteil von größer 60% davon und einer Wasserlöslichkeit von kleiner als 30%, ebenfalls bezogen auf dem Gesamt-P2O5-Gehalt resultiert.

Als weitere Komponenten können weiterhin ein oder mehrere Strukturstoff(e) eingesetzt werden, so beispielsweise Torf, Humus, Pyrolysesubstrate aus Biomasse, Biokohle aus der Hydrothermale Carbonisierung (HTC), aber auch Klärschlämme, Gärreste, Gülle, Tierausscheidungen, Tier- und/oder Fischmehl. Der Begriff "Gärrest" beschreibt im Sinne der Erfindung den flüssigen und/oder festen Rückstand, der bei der Vergärung von Biomasse zurückbleibt. Der Begriff "Gülle" beschreibt im Sinne der Erfindung bevorzugt ein Gemisch aus Kot und Harn von landwirtschaftlichen Nutztieren in Kombination mit Einstreu mit wechselndem Wassergehalt.

Daher sind Ausführungsformen des erfindungsgemäßen phosphatangereicherten, schwermetallabgereicherten Düngergranulats (11) und/oder des erfindungsgemäßen Verfahrens dadurch gekennzeichnet, dass nach Prozessschritt f) und vor und/oder während der Granulation mindestens ein oder mehrere Strukturstoff(e), ausgewählt aus der Gruppe umfassend Torf, Humus, Pyrolysesubstrate aus Biomasse, Biokohle (z.B. aus der Hydrothermale Carbonisierung (HTC)), Klärschlämme, Gärreste, Gülle, Tierausscheidungen, Tier- und Fischmehl, als weitere Komponenten (13) hinzugefügt werden.

Je nach Art und Konzentration dieses oder dieser Strukturstoff(e) kann die Düngewirkung eingestellt und/oder eine bodenverbessernde Wirkung beim Einsatz der Düngergranulate erzielt werden. Die Düngewirkung wird vorzugsweise dadurch beeinflusst, dass durch das Zufügen des Strukturstoffs die Struktureigenschaften des erzeugten Düngergranulates und damit dessen Eigenschaften, wie beispielsweise die Porosität, Größe der Poren, die Festigkeit und/oder Löslichkeit, eingestellt werden können. Dadurch wird der vorteilhafte Effekt bewirkt, dass beispielsweise die Nährstofffreisetzung gezielt an das Pflanzenwachstum und den zeitlich abhängigen Nährstoffbedarf der Pflanze angepasst werden kann. Ein weiterer vorteilhafter Effekt dieser Ausführungsform ist eine gezielte Bodenverbesserung durch das Zufügen eines Strukturstoffs zu dem Düngegranulat. So kann der Strukturstoff beispielsweise zu einer Humusbildung, zur Verbesserung der Bodenstruktur und/oder zu einer Verbesserung des Luft- und/oder Wasserhaushalts des Bodens bei Anwendung der Düngemittel in der Landwirtschaft führen. Dies kann beispielsweise das Wurzelwachstum fördern, das Bodenleben aktivieren und/oder die Pflanzenvitalität gegen Stresssituationen stimulieren.

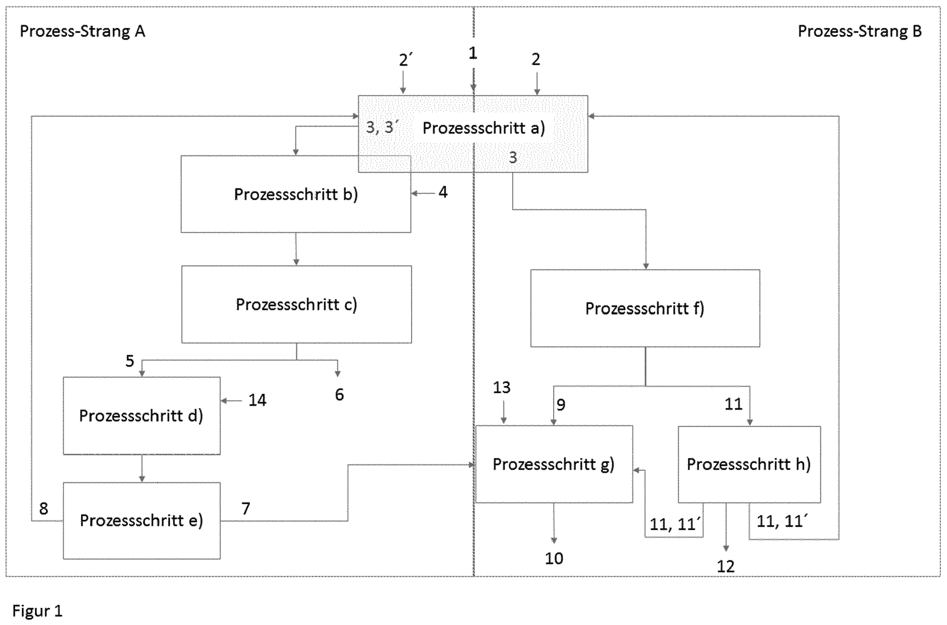

In einer bevorzugten Ausführungsform der Erfindung werden Huminsäure und/oder Fulvosäure und/oder deren Salze (Humate, Fulvate) als weitere Komponente zugegeben. Bevorzugt wird diese weitere Komponente (13) nach Prozessschritt f) und/oder vor und/oder während der Granulierung zugeführt (siehe z.B. Figur 1). Diese (Nähr-)Stoffe haben vorteilhafterweise wachstumsfördernde Eigenschaften. So wird die Nährstoffaufnahmekapazität der Wurzel wesentlich erhöht und regt somit das Wachstum an. Durch ihre Zugabe werden das Pflanzenwachstum und die Zellbildung gefördert. Sie stimulieren die Zellmembranen sowie die Stoffwechselaktivitäten und erhöhen dadurch die Keimraten. Auch werden wichtige Pflanzenenzyme besonders gut angeregt. Die kräftige Wurzelausbildung unterstützt die Nährstoffaufnahmekapazität. Die so gestärkten Pflanzen sind deutlich weniger anfällig gegen Krankheiten. Durch die Zugabe dieser Stoffe kann die P-Aufnahme der Pflanzen erhöht werden, da es die P-Adsorption des Bodens blockiert und durch Komplexierung von Ca, Al, Fe das Ausfällen von P in schwerlösliche Verbindungen verhindert. Überraschenderweise wurde festgestellt, dass durch Zugabe dieser Stoffe in einem Bereich von 0,1 - 25 % (bezogen auf das fertige erfindungsgemäße Düngegranulat) eine deutliche Steigerung des pflanzenverfügbaren Phosphats im Boden und damit eine erhöhte P-Aufnahme der Pflanzen resultieren. Besonders bevorzugt ist die Zugabe dieser Stoffe in einem Anteil zwischen 0,1 bis 10 % (bezogen auf das fertige erfindungsgemäße Düngegranulat), da bereits in diesem Mengenbereich eine erhebliche Steigerung der Düngewirkung erreicht wird und folglich die notwendige Düngermenge entsprechend um bis zu 40 % reduziert werden kann. Ganz besonders ist die Zugabe dieser Stoffe in einem Mengenbereich von 0,1 - 5 % (bezogen auf das fertige erfindungsgemäße Düngegranulat), da in diesem Bereich ein besonders günstiges wirtschaftliches Verhältnis zwischen den Kosten für diese Stoffe und den resultierenden verbesserten Eigenschaften resultiert.

In einer weiterhin bevorzugten Ausführungsform der Erfindung werden organische Säure als weitere Komponente in fester und/oder flüssiger Form zugegeben. Organische Säuren sind beispielsweise Ascorbinsäure, Essigsäure, Ameisensäure, Gluconsäure, Äpfelsäure, Bernsteinsäure, Oxalsäure, Weinsäure und Zitronensäure. Organische Säuren spielen bei der Phosphataufnahme der Pflanzen aus dem Boden eine wesentliche Rolle. Insbesondere durch das Vorhandensein von organischen Säuren am Wurzelwerk können die Pflanzen ausreichend Phosphat aufnehmen, wobei typischerweise Mikroorganismen diese organischen Säuren im Ökosystem bilden. Überraschenderweise wurde nun festgestellt, dass die Phosphataufnahme der Pflanzen erhöht wird, wenn im zugeführten Düngergranulat bereits anteilig eine oder mehrere organische Säuren bevorzugt in Summe in einem Bereich von 0,1 bis 30 % (bezogen auf das fertige erfindungsgemäße Düngegranulat) integriert sind. Vermutet wird, dass diese mit zugeführten organischen Säuren dadurch vorzugsweise direkt eine vergleichbare Funktion im Wurzelbereich der Pflanze übernehmen, ohne dass diese organischen Säuren erst durch Mikroorganismen erzeugt werden müssen. Bevorzugt sind Zitronensäure, Oxalsäure und/oder Weinsäure einzeln oder in Kombination eingesetzt, da diese organischen Säuren verhältnismäßig kostengünstig und in ausreichenden Mengen verfügbar sind. Besonders bevorzugt ist der Einsatz von Zitronensäure, Oxalsäure und Weinsäure einzeln oder in Kombination in einem Mengenbereich 0,1 % bis 10 % (bezogen auf das fertige erfindungsgemäße Düngegranulat), da die aufnahmeverbessernde Wirkung dieser Säuren im Verhältnis zu den Rohstoffkosten hier besonders günstig ist. Die aufgeführten Anteile an organischen Säuren im Düngegranulat können dabei entweder wie zusätzlich als weitere Komponente zugegeben werden und/oder bei Einsatz organischer Säuren als Reaktionsmittel nach der Reaktion (zumindest anteilig weiter in diesem Mengenbereich) vorliegen und so in das Düngergranulat überführt werden.

Auch können Mittel zur pH-Wert-Einstellung, so beispielsweise Laugen, Hydroxide, basische Salze, Ammoniak oder gebrannter Kalk, als weitere Komponenten zugefügt werden. Dadurch können beispielsweise noch vorhandene Säurereste, beispielsweise bei Einsatz oder Bildung von Säuren, neutralisiert und/oder der pH-Wert des erzeugten Düngemittels gezielt eingestellt werden.

Die eingesetzten Stoffe, wie anorganisches Sekundärphosphat, weitere Komponenten, können einzeln, in Kombination oder die erzeugte Mischung in Prozessschritt g) gemahlen werden. Dies ist beispielsweise dann vorteilhaft, wenn die vorliegende Partikel- oder Aggregatgröße einzelner oder mehrerer Einsatzstoffe nicht ausreichend fein genug ist, um beispielsweise eine ausreichende Homogenität zu erreichen oder es dadurch zu prozesstechnischen Schwierigkeiten, beispielsweise Verstopfung, kommen kann. Durch die Reduzierung der Partikel- bzw. Aggregatgröße kann dies vorteilhafterweise verbessertet werden. Auch kann die Löslichkeit von Stoffen oder beinhalteten Verbindungen verbessert werden, so beispielsweise die Löslichkeit phosphathaltiger Aschen oder Schlacken. Je nach Art des zu vermahlenden Stoffes und der gewünschten Korngröße und Korngrößenverteilung können unterschiedliche Trocken- oder Nassmahl-Technologien mit oder ohne Mahlhilfen eingesetzt werden. Die zur Trocken- oder Nassmahlung verwendete Aggregate können beispielsweise Kugelmühlen, Stiftmühlen, Strahlmühle, Perlmühlen, Rührwerkskugelmühlen, Hochleistungsdispergierer und/oder Hochdruckhomogenisatoren sein.

Die Granulierung bzw. Extrusion kann vorzugsweise während der Erzeugung des Gemisches und/oder daran anschließend erfolgen, beispielsweise im gleichen Mischgerät oder in einer separaten Granulier- bzw. Extrusionseinheit, die beispielsweise von Pelletier- oder Granuliertellern, Granuliertrommel, oder Extruder gebildet wird.

Es ist im Sinne der Erfindung bevorzugt, dass der Anteil der im Prozessschritt b) nicht-abgetrennten und damit beim Feststoff verbleibenden flüssigen Phase in diesem Prozessschritt erheblichen Einfluss auf die ablaufenden Reaktionen, die Art der Granulation, die Produktqualität und/oder die Wirtschaftlichkeit des Verfahrens hat. Der Gesamtanteil der flüssigen Phase vor der Granulation und/oder Extrusion kann dabei beispielsweise über die Prozessführung im Prozessschritt f) und die Art und Menge der in Prozessschritt g) zugeführten flüssigen, feuchten oder trockenen Komponenten eingestellt werden. Auch kann bei Bedarf eine teilweise Trocknung vor der Granulation erfolgen, um beispielsweise den Gesamtanteil der flüssigen Phase vor der Granulation und/oder Extrusion einzustellen.

In einer bevorzugten Ausführungsform der Erfindung ist oder wird die Rohstoffdispersion im Prozessschritt c) bzw. der feuchte Feststoff so eingestellt, dass sie eine Feuchte von kleiner als 30 %, bevorzugt kleiner als 25 % und besonders bevorzugt kleiner als 20 % enthält. Die bevorzugt erdfeuchte Mischung kann vorzugsweise direkt granuliert und/oder extrudiert werden. Zudem können verhältnismäßig kostengünstige Granulier- und/oder Extrusionsverfahren bzw. -technologien, wie beispielsweise Wälzmischer, Schermischer, Pflugscharmischer, Planeten-Mischkneter, Intensivmischer und/oder Extrusionsverfahren verwendet werden. Die zur Granulation erforderliche Klebeneigung kann bevorzugt auch durch unterschiedliche Stoffe, wie beispielsweise Bindemittel eingestellt werden. Diese können beispielsweise zusätzlich zugeführt werden. Vorteil dieser bevorzugten Ausführungsform der Erfindung ist es, dass eine gute Rundheit der Granulatkörner in dem bevorzugten Granulatgrößenbereich erzielt wird und die Granuliertechnologie und die Prozesskosten günstig anzuwenden sind.

Es ist im Sinne der Erfindung bevorzugt, dass Düngergranulate eine geringe Feuchtigkeit, d.h. physikalisch gebundenes Wasser, aufweisen. Insbesondere ist es bevorzugt, dass eine Feuchtigkeit in einem Bereich von kleiner als 5 %, bevorzugt kleiner als 2 % liegt. Es kann im Sinne der Erfindung bevorzugt sein, dass die erzeugten Granulate nach der Granulation und/oder Extrusion getrocknet oder zumindest zusätzlich nachgetrocknet werden. Dafür stehen unterschiedliche Trocknungstechnologien zur Verfügung, so beispielsweise Kontakttrockner, bei denen die zur Trocknung notwendige thermische Energie vorzugsweise durch den Kontakt mit Heizflächen zugeführt wird, konvektive Trockner, bei denen die zur Trocknung notwendige thermische Energie vorzugsweise durch den Kontakt mit Heißgas zugeführt wird oder Strahlungstrockner, bei denen die zur Trocknung notwendige thermische Energie vorzugsweise durch eine Strahlung mit einer definierten Frequenz zugeführt wird. Durch die Trocknung wird die vorhandene flüssige Phase, zum Beispiel das Wasser, im erforderlichen Maße abgetrennt. Vorzugsweise erfolgt durch die Trocknung auch ein Festigkeitsanstieg der Granulate, zum Beispiel indem sich bindende Phasen durch die Trocknung bilden oder beispielsweise indem ein Bindemittel dadurch seine Bindewirkung ausbildet.

Werden Kristallisationsprodukte aus der Phosphorelimination, wie Struvit, Brushit und/oder hydroxyxlapatitähnliche Ca-P-Phase, der Rohstoffmischung zugeführt und sind folglich im erzeugten Granulat bzw. Grüngranulat enthalten, ist es im Sinne der Erfindung bevorzugt, dass die Trocknung in einer bevorzugten Ausführungsform der Erfindung oberhalb von 100°C bezogen auf die Materialtemperatur bei der Trocknung erfolgt. Diese Kristallisationsprodukte enthalten vorzugsweise einen großen Anteil chemisch gebundenen Wassers, wobei es sich dabei vorzugsweise nicht um "Feuchte" im Sinne der Erfindung handelt, sondern um Wasser, das in der Kristallstruktur eingebunden vorliegt. Im Bereich oberhalb von 100 °C wird dieses chemisch gebundene Wasser vorzugsweise abgespaltet. Durch das Abtrennen des Wassers aus dem Granulat erhöht sich vorteilhafterweise der prozentuale Anteil der verbleibenden Komponenten. So kann beispielsweise die Konzentration an Nährstoffen im Granulat erhöht werden, die zuvor durch das chemisch gebundene Wasser quasi entsprechend verdünnt vorlag. In einer besonders bevorzugten Ausführungsform der Erfindung erfolgt die Trocknung, wenn Kristallisationsprodukte aus der Phosphorelimination enthalten sind in einem Bereich 100-140°C bezogen auf die Materialtemperatur bei der Trocknung. Es ist im Sinne der Erfindung somit ganz besonders bevorzugt, dass die Trocknung in einem Temperaturbereich zwischen 100 und 140 °C erfolgt. Oberhalb von 140°C besteht die Gefahr, dass zunehmend Stickstoff abgespalten wird.

Es ist im Sinne der Erfindung bevorzugt, dass das Düngergranulat möglichst formgenau hergestellt werden kann. Eine möglichst gleichmäßige Größe der Granulatkörner stellt vorteilhafterweise definierte, gleichmäßige Zerfallseigenschaften sicher, was für eine gezielte Nährstoffzuführung notwendig ist. Da zudem das Vorliegen von Überkorn und Unterkorn die maschinelle Ausbringung des Düngemittels beeinträchtigen kann, ist es im Sinne der Erfindung bevorzugt, dass Über- und Unterkorn von dem Gutkorn getrennt und gegebenenfalls dem Produktionsprozess, insbesondere dem Misch- und/oder Granulierprozess, gegebenenfalls mit vorheriger Aufbereitung und/oder Aufmahlung, rückgeführt werden kann. Der Begriff "Gutkorn" beschreibt im Sinne der Erfindung bevorzugt ein Granulat in einem gewünschten Größenbereich für die Granulatkörner. Die Begriffe "Überkorn" und "Unterkorn" beschreiben im Sinne der Erfindung vorzugsweise solche Granulatkörner, die - vorzugsweise deutlich - größere bzw. kleine Durchmesser als das Gutkorn aufweisen.

Die erfindungsgemäß erzeugten Düngegranulate können eine oder mehrere Beschichtungen zur Funktionalisierung (z.B. Reduzierung der Verklumpungsneigung, Erhöhung der Festigkeit), zum Schutz (z.B. vor Feuchtigkeit) und/oder zur gesteuerten Nährstofffreistellung (Beeinflussung der Löslichkeit durch das Coating) erhalten. Zur Beschichtung sind dem Fachmann zahlreiche Verfahren und Technologien bekannt, wobei hier alle Verfahren und Technologien geeignet sind, die eine gewünschte Beschichtung mit der gewünschten Funktionalität erzeugen.

Das erfindungsgemäß erzeugten Düngegranulate kann zur Nährstoffzufuhr in der Land-, Forstwirtschaft und/oder im Gartenbau verwendet werden, wobei das Düngergranulat mindestens ein anorganisches Sekundärphosphat umfasst, sowie einen größer 60 % neutral-ammoniumcitratlöslichen P2O5-Anteil. Es ist im Sinne ganz besonders bevorzugt, dass das vorgeschlagene Düngergranulat in der Land-, Forstwirtschaft und/oder im Gartenbau verwendet werden kann.

**Im Prozessschritt h)** des vorgeschlagenen Verfahrens erfolgt die Rückführung der im Prozessschritt f) zumindest teilweise abgetrennten flüssigen Phase in den Prozessschritt a) zur Herstellung einer Rohstoffdispersion oder g) zur Granulation, wobei optional eine zumindest teilweise Schwermetallabtrennung erfolgen kann. Ob und inwieweit Schwermetalle abgeschieden werden müssen, hängt dabei beispielsweise von der Schwermetallbelastung der eingesetzten Rohstoffe, den rechtlichen Vorgaben und vom gewünschten Nachhaltigkeitsanspruch der erzeugten Produkte ab.

Vor der möglichen Schwermetallabtrennung kann entweder die Rohstoffdispersion im Prozessschritt a) bzw. f) und/oder die abgetrennte flüssige Phase konditioniert werden. Eine solche Konditionierung kann dabei insbesondere diejenigen Maßnahmen umfassen, die die Schwermetallabtrennung im Prozessschritt h) ermöglichen, verbessern und/oder begünstigen, beispielsweise eine gezielte Einstellung des pH-Werts, das Ausfällen oder Abtrennen von störenden Begleit- und/oder Nährstoffelementen oder Einstellen einer definierten Konzentration, Viskosität und/oder Temperatur.

Zur möglichen Abtrennung der Schwermetallionen aus der teilweise abgetrennten flüssigen Phase stehen unterschiedliche Verfahren zur Verfügung, beispielsweise mittels eines Ionenaustauschers, Flüssig-flüssig-Abtrennung, Aktivkohle, Bakterien, Pilzen, Algen, einer Biomasse aus Bakterien, Pilzen oder Algen, eines Fällungsmittels, durch Nanofilters und/oder elektrolytisch. Je nach Zusammensetzung und Konditionierung der flüssigen Phase sind die Verfahren zur Schwermetallabtrennung unterschiedlich geeignet und werden vorzugsweise entsprechend danach ausgewählt. Das eingesetzte Verfahren wird auch danach ausgewählt, welche Sorte von Schwermetallen in welcher Konzentration abgetrennt werden soll. Dies kann zum Beispiel daran bemessen werden, welche unerwünschten Schwermetallsorten im anorganischen Sekundärphosphat vorhanden sind und wie viel davon abgetrennt werden soll. Auch müssen die ausgewählten Schwermetalle nicht vollständig abgetrennt werden, gegebenenfalls ist eine teilweise Abtrennung ausreichend, um die gewünschte Schwermetallkonzentration im erzeugten Düngergranulat, beispielsweise unterhalb der Grenzwerte der gültigen Düngemittelverordnung, zu erhalten. In einer anderen bevorzugten Ausführungsform der Erfindung erfolgt die selektive Schwermetallabtrennung durch Hydroxidfällung durch eine pH-Wert-Anhebung. In einer anderen bevorzugten Ausführungsform der Erfindung erfolgt die selektive Schwermetallabtrennung durch Sulfidfällung durch Zuführen von beispielsweise H2S, CH4N2S, Na2S.

Grundsätzlich kann die von den Schwermetallen teilweise gereinigte oder nicht-gereinigte flüssige Phase im Ganzen oder in Teilen entsorgt oder einer anderen Verwendung zugeführt werden. Bevorzugt ist es im Sinne der Erfindung, dass die im Prozessschritt f) abgetrennte flüssige Phase zumindest teilweise dem Prozessschritt a) und/oder dem Prozessschritt g) zugeführt wird. Im Prozessschritt a) dient die flüssige Phase insbesondere der Einstellung des Feststoff-Flüssigkeits-Verhältnisses und ersetzt vorzugsweise in äquivalenter Menge den oben aufgeführten Wasseranteil in der Rezeptur der Rohstoffdispersion. Im Prozessschritt g) kann die flüssige Phase zur Granulation / Extrusion oder zur Einstellung der Feuchte des Gemischs für die Granulation oder Extrusion dienen.

Die in Prozessschritt f) abgetrennte flüssige Phase enthält gelöste Komponenten beispielsweise durch die Reaktion zwischen anorganischen Sekundärphosphat und Reaktionsmittel. Wird diese flüssige Phase mit den gelösten Komponenten Prozessschritt a) bei kontinuierlich fortlaufender Prozessführung zumindest anteilig zurückgeführt, stellt sich ein Gleichgewichtskreislauf mit einer Gleichgewichtskonzentration an gelösten Komponenten in diesem Teilkreislauf ein.

In einer bevorzugten Ausführungsform der Erfindung wird die in Prozessschritt f) abgetrennte und von den Schwermetallen teilweise gereinigte oder nicht-gereinigte flüssigen Phase zumindest anteilig in Prozessschritt a) zurückgeführt. Dabei werden bereits vor oder bei der Rückführung in den Prozessschritt a) das oder die erforderlichen Reaktionsmittel zumindest teilweise der flüssigen Phase zugeführt und so die flüssige Phase gemeinsam mit zumindest dem anteiligen Reaktionsmittel in Prozessschritt a) übergeben. Sind das oder die Reaktionsmittel beispielsweise Säuren, kann durch die Zuführung des Reaktionsmittels vorteilhafterweise der pH-Wert gesenkt und damit eine Ausfällung oder Auskristallisation von gelösten Bestandteilen aus der flüssigen Phase bis zur Rückführung in Prozessschritt a) reduziert werden.

In einem weiteren Aspekt bezieht sich die Erfindung auch auf eine Vorrichtung zur Herstellung des erfindungsgemäßen phosphatangereicherten, schwermetallabgereicherten Düngergranulats (11). In bevorzugten Ausführungsformen umfasst die erfindungsgemäße Vorrichtung eine erste Einheit:
- entweder aus mindestens einem ersten Mischbehälter zur Zuführung und/oder Mischung zumindest des anorganischen Sekundärphosphats (1) und des Reaktionsmittels (2), wodurch eine Rohstoffdispersion erhalten wird, wobei für die Inkubationszeit entweder der erste Mischbehälter genutzt wird und/oder weitere Behälter vorhanden sind, in die die Rohstoffdispersion für die Inkubationszeit überführt und gemischt wird, und daran anschließend einen Einrichtung zum Aufteilen der erzeugten Rohstoffdispersion auf Prozess-Strang A und B
- oder einer Einheit zum Aufteilen des mindestens einen anorganischen Sekundärphosphates (1) auf Prozess-Strang A und B,
   wobei sich daran mindestens ein Mischbehälter zur Zuführung und/oder Mischung zumindest des jeweils aufgeteilten anorganischen Sekundärphosphats (1) und des Reaktionsmittels (2) zur Herstellung einer Rohstoffdispersion anschließt,
   wobei für die Inkubationszeit entweder der Mischbehälter genutzt wird und/oder weitere Behälter vorhanden sind, in denen die Rohstoffdispersion für die Inkubationszeit überführt und gemischt wird,
sowie weiterhin umfassend im Prozess-Strang A
- mindestens einen Mischbehälter mindestens zur Zuführung der aufgeteilten Rohstoffdispersion im Prozess-Strang A und des mindestens einen Schwermetallfällungsmittels (4),
- mindestens eine Abtrenneinheit zur Abtrennung zumindest eines Teils der phosphathaltigen, schwermetallarmen flüssigen Phase (5) der Rohstoffdispersion und zur Ausschleusung des übrigen schwermetallhaltigen Filterkuchens (6) aus dem Prozess,
   wobei die Abtrenneinheit in den vorstehenden Mischbehälter integriert oder davon separat ist,
- mindestens einen Reaktionsbehälter, in dem die Ausfällung von Phosphat (7) aus der phosphathaltigen flüssigen (5) Phase mindestens anteilig erfolgt,
- mindestens eine Abtrenneinheit zur Abtrennung zumindest eines Teils des ausgefällten Phosphates (7), worin integriert sind und/oder daran separat anschließen
   ∘ mindestens eine Rückführeinheit für die abgetrennte flüssige Phase (8) zum Mischbehälter zur Herstellung einer Rohstoffdispersion analog Prozessschritt a) und/oder zur Granulier- und/oder Extrudiereinheit analog Prozessschritt g), und
   ∘ mindestens eine Überführungseinheit für das abgetrennte ausgefällten Phosphates (7) zur Granulier- und/oder Extrudiereinheit analog Prozessschritt g), und
   im Prozess-Strang B
- mindestens eine Abtrenneinheit zur Abtrennung zumindest eines Teils der flüssigen Phase (3),
- mindestens eine Granulier- und/oder Extrudiereinheit zum Granulieren und/oder Extrudieren mindestens eines Teils des im Prozess-Strang A erzeugten ausgefällten Phosphates (7) und mindestens einem Teil der verbleibenden Rohstoffdispersion mit reduzierter flüssiger Phase (9) aus Prozessschritt f),
   wobei in dieser Granulier- und/oder Extrudiereinheit weitere Komponenten (13) zuführbar sind und/oder die Mischung mischbar ist,
   wobei mindestens eine Zuführungseinheit von der Abtrenneinheit zum Überführen der Rohstoffdispersion in die Granulier- und/oder Extrudiereinheit vorhanden ist,
- mindestens eine Rückführeinheit für die abgetrennte flüssige Phase (11, 11') ohne Schwermetallabscheidung, oder nach der teilweisen Absonderung der Schwermetalle (12), zum Mischbehälter für die Herstellung einer Rohstoffdispersion analog Prozessschritt a), und/oder zur Granulier- und/oder Extrudiereinheit.

In einem weiteren Aspekt bezieht sich die Erfindung auch auf die Verwendung des erfindungsgemäßen phosphatangereicherten, schwermetallabgereicherten Düngergranulats (11) zur Nährstoffzufuhr in der Land-, Forstwirtschaft und/oder im Gartenbau. In bevorzugten Ausführungsformen ist diese erfindungsgemäße Verwendung dadurch gekennzeichnet, dass das phosphatangereichertes, schwermetallabgereicherten Düngergranulat (11) mindestens ein anorganisches Sekundärphosphat (1) umfasst, sowie einen größer 60 % neutral-ammoniumcitratlöslichen P2O5-Anteil.

### Beispiele

Die Erfindung wird anhand der nachfolgenden Ausführungsbeispiel näher beschrieben. Aus den weiteren Unteransprüchen und der Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

### Ausführungsbeispiel 1:

In einem Mischbehälter werden 200 kg Wasser und 50 kg Schwefelsäure (95 %) als Reaktionsmittel vorgelegt und vermischt, dazu werden 100 kg Klärschlammasche (P2O5-Gehalt 19,0 %, davon neutral-ammoniumcitratlöslich 38 % und <1 % wasserlöslich) als anorganisches Sekundärphosphat zugegeben und die so erzeugte Rohstoffdispersion gemischt. Im anorganischen Sekundärphosphat liegen 75 mg/kg Pb, 65 mg/kg Ni, 14 mg/kg As und 2 mg/kg Cd vor. Es wird eine Inkubationszeit von 30 Minuten eingehalten, damit das anorganische Sekundärphosphat mit dem Reaktionsmittel im ausreichenden Maße regieren kann. Nach der Inkubationszeit werden 280 kg der so erzeugte Rohstoffdispersion dem Prozessschritt b) im Prozess-Strang A und 70 kg der so erzeugte Rohstoffdispersion dem Prozessschritt f) im Prozess-Strang B zugeführt.

In der dem Prozessschritt b) zugeführten Rohstoffdispersion liegen 3 % des mit dem anorganischen Sekundärphosphats Prozess-Strang B zugeführten Pb, 8% des Ni, 91 % des As, 75 % des Cd und 98 % des P gelöst vor. Im Prozessschritt b) werden der zugeführten Rohstoffdispersion 1 kg Natriumsulfid zugegeben und eine Inkubationszeit im Sinne einer Reaktionszeit zwischen dem Schwermetallfällungsmittel Natriumsulfid und der Rohstoffdispersion. Nach der Inkubationszeit liegen noch 2 % des mit dem anorganischen Sekundärphosphats zugeführten Pb, 8 % des Ni, 5 % des As, 7 % des Cd und 95 % des P gelöst vor.

Diese so konditionierte Rohstoffdispersion wird einer Fest-Flüssig-Trennung mittels Membranfilterpresse zugeführt. Mittels Membranfilterpresse wird ein großer Teil der flüssigen Phase vom Feststoff so abgetrennt, dass 105 kg schwermetallhaltiger Filterkuchen als Feststoffgemisch mit einer Feuchte von 40 % gebildet wird. Dieser schwermetallhaltiger Filterkuchen wird aus dem Prozess ausgeschleust. Zudem entsteht durch die Fest-Flüssig-Trennung eine phosphathaltigen, schwermetallarmen flüssigen Phase, die Prozessschritt d) zugeführt werden.

Durch Zugabe von CaO wird der pH-Wert der abgetrennten phosphathaltigen, schwermetallarmen flüssigen Phase auf 3 eingestellt. Durch die pH-Werterhöhung fällt ein großer Teil des Phosphates aus, wobei anschließend nur noch 5 % des mit dem anorganischen Sekundärphosphats Prozess-Strang B zugeführten P gelöst vorliegen. Anschließend erfolgt eine Fest-Flüssig-Trennung mittels Membranfilterpresse, wodurch das ausgefällte Phosphat abgetrennt und Prozessschritt g) im Prozess-Strang B zugeführt wird. Das ausgefällte Phosphat weist neben einen Anteil von 35 % P2O5 als Phosphat 25 % mit abgetrennte Begleitstoffe aus der Klärschlammasche (wie Al-, Mg-, Fe-, K - Oxid(hydrate/Hydroxide) auf. Diese Begleitstoffe werden mit dem ausgefällten Phosphat im Prozess-Strang B zu Düngegranulaten verarbeitet. Die abgetrennte (phosphatarme) flüssige Phase wird dem nächsten Batch der Herstellung einer Rohstoffdispersion (Prozessschritt a)) vollständig zugeführt.

Im Prozessschritt f) werden die 70 kg der zugeführten Rohstoffdispersion einer Fest-Flüssig-Trennung mittels Membranfilterpresse unterzogen, wodurch ein erdfeuchter Filterkuchen mit 28 % Restfeuchte gebildet wird. Die abgetrennten Flüssigphase wird ohne Schwermetallabreicherung dem Prozessschritt a) für die Herstellung des nächsten Batchs der Rohstoffdispersion zugeführt.

Der abgetrennte erdfeuchter Filterkuchen wird im Prozessschritt g) mit dem im Prozess-Strang A gebildeten ausgefällte Phosphat homogen vermischt und anschließend granuliert. Die so gebildeten Grüngranulate werden anschließend bei 110 °C getrocknet und in Granulatkörner mit Durchmessern in einem Bereich zwischen 2 und 5 mm fraktioniert. Die Fraktion von Granulatkörnern mit einem Durchmesser kleiner als 2 mm und die Fraktion von Granulatkörnern mit einem Durchmesser größer als 5 mm werden nach vorheriger Aufmahlung der Granulation zurückgeführt.

Das so erzeugte 61 kg Granulat mit einer Restfeuchte von 5 % weist nach der Einstellung der oben beschriebenen Gleichgewichtskreisläufe vorteilhafterweise eine runde und kompakte Granulatform im Bereich 2-5 mm auf, einen P2O5-Gesamtgehalt von 25 %, wobei davon 93 % ammoniumcitratlöslich und 15% wasserlöslich sind. Das erzeugten Düngergranulat weißt 32 mg/kg Pb, 16 mg/kg Ni, 3 mg/kg As und 0,4 mg/kg Cd auf. Durch den Prozess werden im Prozess-Strang A somit nicht nur mehr als 75 % As und Cd als Beispiele für gut durch das Reaktionsmittel gelöste Schwermetalle, sondern auch mehr als 75 % von Pb und Ni als Beispiele für sehr schlecht durch das Reaktionsmittel gelöste Schwermetalle abgetrennt.

### Ausführungsbeispiel 2:

Analog Ausführungsbeispiel 1 wird eine Rohstoffdispersion hergestellt. Durch die gezielte Steuerung der Teilstoffströme der zugeführten Rohstoffdispersion für Prozess-Strang A bzw. B können die resultierende Phosphatanreicherung und Schwermetallabreicherung im Düngergranulat eingestellt werden. Im Ausführungsbeispiel 2 werden nach der Inkubationszeit 140 kg der so erzeugte Rohstoffdispersion dem Prozessschritt b) im Prozess-Strang A und 210 kg der so erzeugte Rohstoffdispersion dem Prozessschritt f) im Prozess-Strang B zugeführt.

Die Prozessschritte b) bis h) werden analog Ausführungsbeispiel 1 lediglich mit den veränderten Mengenverhältnissen analog der veränderten Aufteilung der Rohstoffdispersion durchgeführt.

Aus Prozessschritt g) resultieren 105 kg Düngergranulat mit einer Restfeuchte von 5 % und einem P2O5-Gesamtgehalt von 17 %, wobei davon 94 % ammoniumcitratlöslich und 17% wasserlöslich sind. Das so erzeugten Düngergranulat weißt 82 mg/kg Pb, 42 mg/kg Ni, 8 mg/kg As und 1,1 mg/kg Cd auf. Durch den Prozess werden somit nicht nur mehr als 35 % As und Cd als Beispiele für gut durch das Reaktionsmittel gelöste Schwermetalle, sondern auch mehr als 35 % von Pb und Ni als Beispiele für sehr schlecht durch das Reaktionsmittel gelöste Schwermetalle abgetrennt.

Die Schwermetallabreicherung ist damit in diesem Ausführungsbeispiel geringer als im Ausführungsbeispiel 1. Dafür fällt in diesem Ausführungsbeispiel deutlich weniger schwermetallhaltiger Filterkuchen mit nur lediglich 52,5 kg (im Grunde Abfall) an. Es wird ein wesentlich größerer Anteil der nicht-phosphatischen Komponenten aus dem anorganischen Sekundärphosphat in das Düngemittel überführt, wodurch eine größere Düngemittelmenge mit geringerer Phosphatkonzentration erzeugt wird.

Die Erfindung wird anhand der nachfolgenden Figuren näher beschrieben. Die Figuren 1 bis 3 zeigen jeweils eine schematische Darstellung von bevorzugten Ausführungsformen des vorgeschlagenen Verfahrens in Ausführungsformen.

**Figur 1** beschreibt eine bevorzugte Ausführungsform des vorgeschlagenen zweistrangigen Verfahrens (umfassend Strang A und Strang B). Die dargestellte bevorzugte Ausführungsform nutzt im Wesentlichen vollständig die verfahrenstechnischen Vorteile des vorgeschlagene zweistrangige Verfahren, welches ein schwermetallhaltiges anorganisches Sekundärphosphat in ein phosphatangereichertes, schwermetallabgereichertes Düngegranulat überführt, wobei das sehr schlecht pflanzenverfügbare Phosphat aus dem Sekundärphosphat in eine sehr gute Pflanzenverfügbarkeit überführt wird.

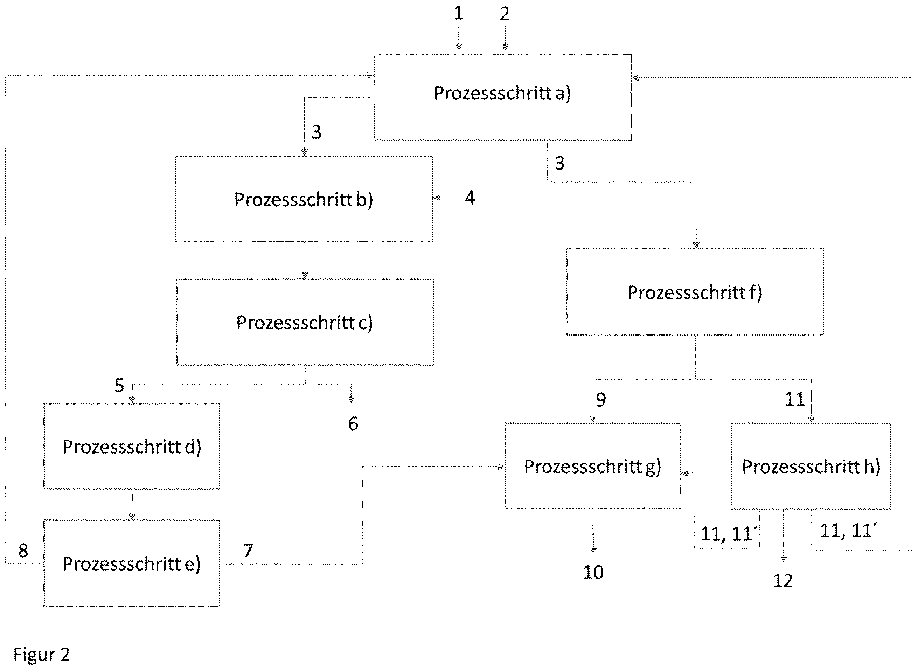

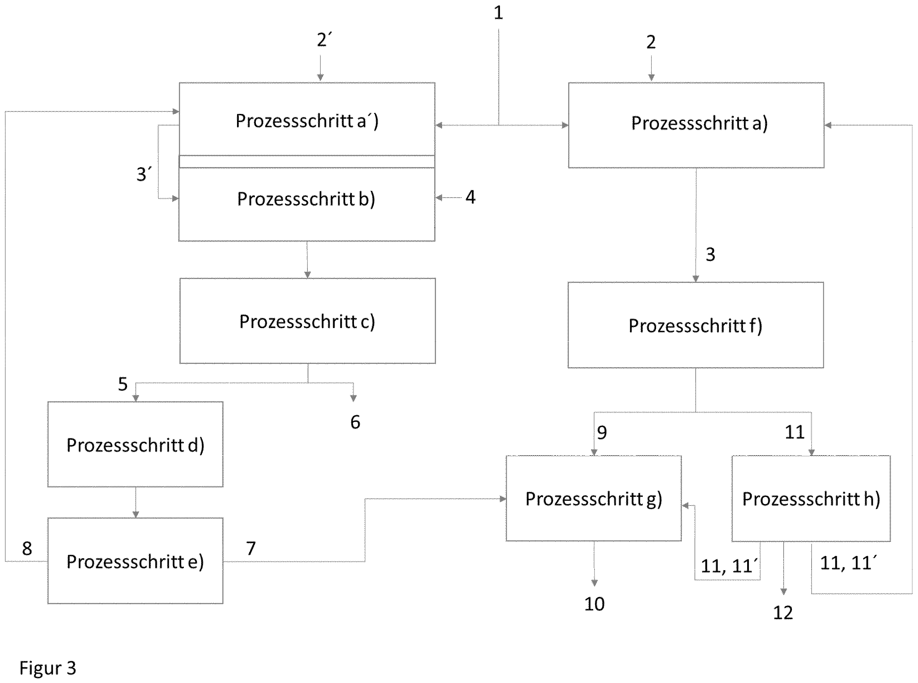

Im Prozessschritt a) wird für die beiden Prozess-Stränge A (links; Schritte b) bis g)) und B (rechts; Schritte f) bis g) / h)) eine Rohstoffdispersion (3, 3') erzeugt und bereitgestellt. Dazu kann
▪ entweder zunächst eine gemeinsame Rohstoffdispersion (3) in einem dafür geeigneten Gefäß erzeugt und diese so erzeugte Rohstoffdispersion (3) anschließend aufgeteilt dem Prozess-Strang A und dem Prozess-Strang B zugeführt werden (Figur 2 beschreibt diese Ausführungsvariante)
▪ oder das anorganischen Sekundärphosphat (1) zunächst aufgeteilt und damit zwei separate Rohstoffdispersionen (3, 3') erzeugt werden, wobei anschließend die eine Rohstoffdispersion (3') dem Prozess-Strang A und die andere Rohstoffdispersion (3) dem Prozess-Strang B zugeführt werden (vergleiche Figur 3 beschreibt diese Ausführungsvariante).

Die Rohstoffdispersion (3, 3') wird zumindest aus einem anorganischen Sekundärphosphat (1) und mindestens einem Reaktionsmittel (2) erzeugt. Zur ausreichenden Reaktion zwischen dem mindestens eine Reaktionsmittel (2) und dem mindestens einem anorganischen Sekundärphosphat (1) wird eine Inkubationszeit abgewartet, wobei die Rohstoffdispersion (3, 3') weiter gemischt werden kann. Es ist vorgesehen, dass das Reaktionsmittel (2) zumindest mit Teilen des durch das anorganische Sekundärphosphat (1) eingebrachten Phosphates reagiert, um dadurch die Löslichkeit und Pflanzenverfügbarkeit dieses Phosphates zu erhöhen.

Die dargestellte bevorzugte Ausführungsform nutzt im Wesentlichen vollständig die verfahrenstechnischen Vorteile durch die Erzeugung der erfindungsgemäßen Rohstoffdispersion mit einem hohen Anteil an flüssiger Phase. Anders als bei Verfahren aus dem Stand der Technik wird zunächst eine Rohstoffdispersion mit hohem Flüssigphasenanteil erzeugt, wobei der hohe Flüssigphasenanteil vorteilhafterweise als Puffer für die ablaufende Reaktion wirkt. Dadurch werden die beim Mischen des phosphathaltigen Sekundärrohstoffes mit der Mineralsäure häufig spontan ablaufenden und zum Teil sehr exothermen Reaktionen kontrollier- und steuerbar und das Gemisch zeigt keine störende Klebrigkeit. Erst nach weitgehend erfolgter Reaktion zwischen anorganischem Sekundärphosphat (1) und dem Reaktionsmittel (2) erfolgt die Weiterverarbeitung bis hin zum Granulat. Die Reaktion der Phosphatumwandlung ist somit vorteilhafterweise vom Prozess der Granulation getrennt.

Die Rohstoffdispersion (3, 3'), die dem Prozessschritt b) (Prozess-Strang A) zugeführten wird, soll so konditioniert sein, dass das Phosphat aus dem mindestens einen anorganischen Sekundärphosphat (1) weitgehend, bevorzugt mit einem Anteil größer 80 % in gelöster Form vorliegt. Im Prozessschritt b) wird dieser so konditionierten und zugeführten Rohstoffdispersion (3, 3') ein Schwermetallfällungsmittel zugesetzt. Durch das Schwermetallfällungsmittel sollen die in der Rohstoffdispersion (3, 3') enthaltenen, gelöst vorliegenden Schwermetalle zumindest anteilig ausgefällt werden. Gelöste Schwermetalle resultieren in der Rohstoffdispersion beispielsweise dadurch, dass durch die Reaktion zwischen dem mindestens einem Reaktionsmittel (2) und dem mindestens einem anorganischen Sekundärphosphat (1) auch die in anorganischen Sekundärphosphat enthaltenen Schwermetalle zumindest anteilig gelöst werden.

Im Prozessschritt c) wird aus der im Prozessschritt b) konditionierten Rohstoffdispersion (3, 3') ein Teil der flüssigen Phase als phosphathaltige, schwermetallarme flüssige Phase (5) abgetrennt und Prozessschritt d) zugeführt. Bevorzugt wird der Prozess so gesteuert, dass in der abgetrennten phosphathaltigen, schwermetallarmen flüssigen Phase (5) mindestens 70 % des mit dem anorganischen Sekundärphosphat (1) der Rohstoffdispersion (3, 3') zugeführten Phosphates beinhaltet sind. Der verbleibende schwermetallhaltiger Filterkuchen (6) aus dem festen bzw. ungelösten Anteil der Rohstoffsuspension (3, 3') mit dem verbleibenden Anteil der flüssigen Phase (Restfeuchte), wird aus dem Prozess ausgeschleust. Durch die Schwermetallfällung im Prozessschritt b) befinden sich diese ausgefällten Schwermetalle im abgetrennten schwermetallhaltigen Filterkuchen (6).

Im Prozessschritt d) wird der phosphathaltigen, schwermetallarmen flüssigen Phase (5) ein Fällungsadditiv (14) zugesetzt. Dieses Fällungsadditiv überführt das gelöste Phosphat zumindest anteilig in eine feste Form. Dieses so ausgefällte Phosphat wird im Prozessschritt e) weitgehend von der flüssigen Phase getrennt, heißt, dass so abgetrennte ausgefälltes Phosphat (7) beinhaltet nach dem Trennungsschritt noch einen Anteil an Restfeuchte. Bevorzugt wird der Prozess so gesteuert, dass das abgetrennte ausgefällte Phosphat (7) mindestens 70 % des mit dem anorganischen Sekundärphosphat (1) der Rohstoffdispersion (3, 3') zugeführten Phosphates beinhaltet sind.

Die abgetrennte flüssige Phase (8) wird bevorzugt dem Prozessschritt a) zur Herstellung der Rohstoffdispersion zurückgeführt. Alternativ kann diese abgetrennte flüssige Phase (8) auch zumindest anteilig aus dem Prozess ausgeschleust und/oder der Granulierung im Prozessschritt i) zugeführt werden.

Im Prozessschritt f) (Prozess-Strang B) wird aus der im Prozessschritt a) erzeugten Rohstoffdispersion (3) ein Teil der flüssigen Phase als abgetrennte Flüssigphase (11) abgetrennt und Prozessschritt h) zugeführt. Die verbleibende Rohstoffdispersion mit reduzierter flüssiger Phase (9) wird Prozessschritt g) zugeführt. Der vorgeschlagene Ablauf der Reaktion zwischen anorganischem Sekundärphosphat (1) und Reaktionsmittel (2) in einer Rohstoffdispersion mit hohem Flüssigphasenanteil hat insbesondere die beschriebenen verfahrenstechnischen Vorteile. Wenn die Rohstoffdispersion direkt granuliert werden soll, muss ein sehr hoher Wasseranteil durch zum Beispiel Trocknung abgetrennt werden, was allerdings kostenintensiv ist. Entsprechend wird im vorgeschlagenen Verfahren ein Teil der flüssigen Phase im Kreislauf gefahren und entsprechend vor der Granulation mechanisch abgetrennt und der Herstellung der Rohstoffdispersion wieder zugeführt.

Im Prozessschritt g) wird die verbleibenden Rohstoffdispersion mit reduzierter flüssiger Phase (9) aus Prozessschritt f) mit zumindest einem Teil des im Prozessschritt e) abgetrennten, ausgefällten Phosphat (7) zusammengeführt und dieses Gemisch granuliert und/oder extrudiert. Je nach eingestelltem Flüssigkeit-Feststoffverhältnis können verschiedene Granulations- bzw. Extrusionsverfahren angewendet werden. Vor und/oder während der Granulierung können weitere Komponenten (13), wie beispielsweise nährstoffhaltige Komponenten, Dispergier- und Entschäumungsmittel, Strukturstoffe, Mittel zur pH-Werteinstellung, Urease-Hemmer, Ammonium-Stabilisatoren und/oder Wasser, insbesondere zur Einstellung einer gewünschten Nährstoff- und/oder Wirkstoffzusammensetzung zugeführt werden. Auch kann zumindest ein Teil der abgetrennten Flüssigphase (11, 11') beispielsweise zur Einstellung des Fest-Flüssige-Verhältnisses genutzt werden.

Aus diesem Prozessschritt g) resultiert ein boden- und pflanzenspezifisches, schwermetallabgereichertes Düngergranulat (10) mit eingestellter und gleichbleibender Nährstoffzusammensetzung, wobei zumindest als eine Nährstoffquelle anorganisches Sekundärphosphat (1), wie beispielsweise Klärschlammaschen, eingesetzt werden kann, wobei das darin enthaltene Phosphat durch Einwirken des Reaktionsmittels (2) gut pflanzenverfügbar gemacht wird und die im anorganischen Sekundärphosphat (2) enthaltenen Schwermetalle zumindest teilweise abgetrennt werden.

Im Prozessschritt h) kann eine zumindest teilweise Absonderung von Schwermetallen (12) aus der im Prozessschritt f) abgetrennten Flüssigphase (11) sowie eine Ausschleusung dieser Schwermetalle (12) aus dem Prozess erfolgen. Zur Abtrennung der Schwermetalle können unterschiedliche Verfahren genutzt werden, je nach Art und Konzentration der abzutrennenden Schwermetalle bzw. der Konditionierung der abgetrennten flüssigen Phase aus Prozessschritt f). Je nach Art des Abtrennungsverfahrens werden Additive zur Schwermetallabtrennung, wie beispielsweise Fällungs- und Flockungsmittel, Mittel zur pH-Wert-Einstellung, Opfermetalle und/oder Extraktionsmittel verwendet. Die so schwermetallreduzierte abgetrennte Flüssigphase 11') oder die abgetrennten Flüssigphase (11) ohne Schwermetallabtrennung wird im Prozessschritt h) zur Herstellung einer Rohstoffdispersion analog zu Prozessschritt a) rückgeführt und/oder zur Granulation in Prozessschritt g) zugeführt. Alternativ kann auch zumindest ein Teil der abgetrennten Flüssigphase (11) ausgeschleust werden.

Die Prozessschritte a) bis h) können beliebig oft wiederholt werden.

Die **Figur 2** zeigt eine bevorzugte Ausführungsform des vorgeschlagenen zweistrangigen Verfahrens (umfassend Strang A und Strang B). Hierbei wird im Prozessschritt a) eine gemeinsame Rohstoffdispersion (3) in einem dafür geeigneten Gefäß erzeugt und diese so erzeugte Rohstoffdispersion (3) anschließend auf dem Prozess-Strang A (links; Schritte b) bis g)) und dem Prozess-Strang B (rechts; Schritte f) bis g) / h)) aufgeteilt zugeführt. Vorteil dieser Ausführungsform ist beispielsweise, dass die Herstellung nur einer Rohstoffdispersion einfacher im Handling, weniger Aufwendig in der Prozesssteuerung ist und für die Herstellung der Rohstoffdispersion (3) nur ein geeigneter Reaktionsbehälter benötigt wird.

Die Prozessschritte b) bis h) verlaufen im Wesentlichen vergleichbar zu der in Figur 1 dargestellten Ausführungsform der Erfindung.

Die **Figur 3** zeigt eine andere bevorzugte Ausführungsform des vorgeschlagenen zweistrangigen Verfahrens (umfassend Strang A und Strang B). Hierbei wird im Prozessschritt a) das anorganischen Sekundärphosphat (1) zunächst aufgeteilt und damit werden zwei separate Rohstoffdispersionen (3, 3') erzeugt, wobei die eine Rohstoffdispersion (3') dem Prozess-Strang A (links; Schritte a') bis g)) und die andere Rohstoffdispersion (3) dem Prozess-Strang B (rechts; Schritte a) bis g) / h)) zugeführt werden. Vorteil dabei ist, dass die so erzeugten Rohstoffdispersionen 3 bzw. 3'unterschiedlich, dem jeweiligen Prozess-Strang angepasst konditioniert werden können. So können beispielsweise unterschiedliche Reaktionsmittel (2,2'), unterschiedliche Anteile an flüssiger Phase eingesetzt oder unterschiedliche Reaktionsparameter wie pH-Wert oder Inkubationszeit gewählt werden, um gezielt die Löse- und Umwandlungsreaktion zwischen anaorganischem Sekundärphosphat (1) und Reaktionsmittel (2) einzustellen.

Die Prozessschritte b) bis h) verlaufen im Wesentlichen vergleichbar zu der in Figur 1 dargestellten Ausführungsform der Erfindung.

**Bezugsliste**

| | |
|---|---|
| 1 | Anorganisches Sekundärphosphat |
| 2 | Reaktionsmittel |
| 3, 3' | Rohstoffdispersion |
| 4 | Schwermetallfällungsmittel |
| 5 | phosphathaltige, schwermetallarme flüssige Phase |
| 6 | schwermetallhaltiger Filterkuchen |
| 7 | ausgefälltes Phosphat |
| 8 | abgetrennte flüssige Phase |
| 9 | Rohstoffdispersion mit reduzierter flüssiger Phase |
| 10 | schwermetallabgereichertes Düngergranulat |
| 11, 11' | abgetrennte Flüssigphase |
| 12 | Schwermetalle |
| 13 | weitere Komponenten |
| 14 | Fällungsadditiv |

## Patentansprüche

1. Phosphatangereichertes, schwermetallabgereichertes Düngergranulat (11) aus mindestens einem anorganischen Sekundärphosphat (1) herstellbar mit einem zweistrangigen Verfahren, wobei dem Prozess-Strang A und dem Prozess-Strang B eine Rohstoffdispersion (3, 3') zugeführt wird, in dem diese Rohstoffdispersion
▪ entweder im Prozessschritt a) aus mindestens einem anorganischen Sekundärphosphat (1) und mindestens ein Reaktionsmittel (2) erzeugt wird und diese erzeugte Rohstoffdispersion (3) dem Prozess-Strang A und B geteilt zugeführt wird
▪ oder im Prozessschritt a), a') das anorganischen Sekundärphosphat (1) zunächst aufgeteilt wird, zwei Rohstoffdispersion (3, 3') umfassend jeweils eine Teilmenge des mindestens ein anorganischen Sekundärphosphat (1) und mindestens ein Reaktionsmittel (2, 2') getrennt voneinander erzeugt werden und diese getrennt erzeugten Rohstoffdispersionen (3, 3') dem Prozess-Strang A und B zugeführt werden,
wobei der Anteil an einer flüssigen Phase in der Rohstoffdispersion (3, 3') größer 30 % ist und die Inkubationszeit zwischen anorganischem Sekundärphosphat (1) und Reaktionsmittel (2, 2') zwischen 1 bis 100 Minuten beträgt,
wobei der Prozess-Strang A die folgenden Prozessschritte umfasst,
b) Zugabe mindestens eines Schwermetallfällungsmittels (4) während und/oder nach der Inkubationszeit,
c) Abtrennung eines Teils der phosphathaltigen, schwermetallarmen flüssigen Phase (5) der Rohstoffdispersion und Ausschleusen des übrigen schwermetallhaltigen Filterkuchens (6) aus dem Prozess,
d) Ausfällung von Phosphat (7) aus der phosphathaltigen flüssigen (5) Phase,
e) Abtrennung des ausgefällten Phosphates (7) und zumindest anteilige Rückführung der abgetrennten flüssigen Phase (8) in den Prozessschritt a) zur Herstellung einer Rohstoffdispersion,
wobei der Prozess-Strang B die folgenden Prozessschritte umfasst,
f) Abtrennung eines Teils der flüssigen Phase der Rohstoffdispersion (3),
g) Erzeugung einer Mischung aus mindestens einen Teil des im Prozess-Strang A erzeugten ausgefällten Phosphates (7) und mindestens einem Teil der verbleibenden Rohstoffdispersion mit reduzierter flüssiger Phase (9) aus Prozessschritt f) sowie Granulierung und/oder Extrudierung dieser erzeugten Mischung, wobei eine Trocknung oder Beschichtung der erzeugten Granulate und/oder Extrudate erfolgen kann und Ausschleusung des erzeugten phosphatangereicherten, schwermetallabgereicherten Düngergranulats (10) aus den Prozess,
h) Zumindest anteilige Rückführung der im Prozessschritt f) abgetrennten Flüssigphase 11, 11') zur Herstellung einer Rohstoffdispersion analog Prozessschritt a) und/oder Zuführung in den Prozessschritt g), wobei zumindest eine teilweises Absondern von Schwermetallen (12) aus der im Prozessschritt f) abgetrennten flüssigen Phase sowie Ausschleusung dieser Schwermetalle (12) aus dem Prozess zuvor erfolgen kann,
und wiederholen der Prozessschritte a) bis h).

2. Verfahren zur Herstellung eines phosphatangereicherten, schwermetallabgereicherten Düngergranulats (11) aus mindestens einem anorganischen Sekundärphosphat (1) durch ein zweistrangiges Verfahren, wobei dem Prozess-Strang A und dem Prozess-Strang B eine Rohstoffdispersion (3, 3') zugeführt wird, in dem diese Rohstoffdispersion
▪ entweder im Prozessschritt a) aus mindestens einem anorganischen Sekundärphosphat (1) und mindestens einem Reaktionsmittel (2) erzeugt wird und diese erzeugte Rohstoffdispersion (3) dem Prozess-Strang A und B geteilt zugeführt wird
▪ oder im Prozessschritt a), a') das anorganischen Sekundärphosphat (1) zunächst aufgeteilt wird, zwei Rohstoffdispersion (3, 3') umfassend jeweils eine Teilmenge des mindestens ein anorganischen Sekundärphosphat (1) und mindestens ein Reaktionsmittel (2, 2') getrennt voneinander erzeugt werden und diese getrennt erzeugten Rohstoffdispersionen (3, 3') dem Prozess-Strang A und B zugeführt werden,
wobei der Anteil an einer flüssigen Phase in der Rohstoffdispersion (3, 3') größer 30 % ist und die Inkubationszeit zwischen anorganischem Sekundärphosphat (1) und Reaktionsmittel (2, 2') zwischen 1 bis 100 Minuten beträgt,
wobei der Prozess-Strang A die folgenden Prozessschritte umfasst,
b) Zugabe mindestens eines Schwermetallfällungsmittels (4) während und/oder nach der Inkubationszeit,
c) Abtrennung eines Teils der phosphathaltigen, schwermetallarmen flüssigen Phase (5) der Rohstoffdispersion und Ausschleusen des übrigen schwermetallhaltigen Filterkuchens (6) aus dem Prozess,
d) Ausfällung von Phosphat (7) aus der phosphathaltigen flüssigen (5) Phase,
e) Abtrennung des ausgefällten Phosphates (7) und zumindest anteilige Rückführung der abgetrennten flüssigen Phase (8) in den Prozessschritt a) zur Herstellung einer Rohstoffdispersion,
wobei der Prozess-Strang B die folgenden Prozessschritte umfasst
f) Abtrennung eines Teils der flüssigen Phase der Rohstoffdispersion (3),
g) Erzeugung einer Mischung aus mindestens einem Teil des im Prozess-Strang A erzeugten ausgefällten Phosphates (7) und mindestens einem Teil der verbleibenden Rohstoffdispersion mit reduzierter flüssiger Phase (9) aus Prozessschritt f) sowie Granulierung und/oder Extrudierung dieser erzeugten Mischung, wobei eine Trocknung oder Beschichtung der erzeugten Granulate und/oder Extrudate erfolgen kann und Ausschleusung des erzeugten phosphatangereicherten, schwermetallabgereicherten Düngergranulats (10) aus den Prozess,
h) Zumindest anteilige Rückführung der im Prozessschritt f) abgetrennten Flüssigphase 11, 11') zur Herstellung einer Rohstoffdispersion analog Prozessschritt a) und/oder Zuführung in den Prozessschritt g), wobei zumindest eine teilweises Absondern von Schwermetallen (12) aus der im Prozessschritt f) abgetrennten flüssigen Phase sowie Ausschleusung dieser Schwermetalle (12) aus dem Prozess zuvor erfolgen kann,
und wiederholen der Prozessschritte a) bis h).

3. Phosphatangereichertes, schwermetallabgereichertes Düngergranulat (11) nach Anspruch 1 oder Verfahren nach Anspruch 2, **dadurch gekennzeichnet, dass** die Zugaben des mindestens einen Schwermetallfällungsmittels und die Schwermetallfällung bei einem pH-Wert kleiner 2 durchgeführt wird und die Abtrennung eines Teils der phosphathaltigen, schwermetallarmen flüssigen Phase (5) der Rohstoffdispersion und Ausschleusen des übrigen schwermetallhaltigen Filterkuchens (6) aus dem Prozess ebenfalls bei pH-Wert kleiner 2 erfolgen.

4. Phosphatangereichertes, schwermetallabgereichertes Düngergranulat (11) nach Anspruch 1 oder 3 oder Verfahren nach Anspruch 2 oder 3, **dadurch gekennzeichnet, dass** mindestens ein zugegebenes Schwermetallfällungsmittel ein Sulfid ist.

5. Phosphatangereichertes, schwermetallabgereichertes Düngergranulat (11) nach Anspruch 1, 3 oder 4 oder Verfahren nach Anspruch 2, 3 oder 4, **dadurch gekennzeichnet, dass** mindestens ein Schwermetallfällungsmittel während der Inkubationszeit zugegeben wird.

6. Phosphatangereichertes, schwermetallabgereichertes Düngergranulat (11) nach Anspruch 1, 3, 4 oder 5 oder Verfahren nach Anspruch 2, 3, 4 oder 5, **dadurch gekennzeichnet, dass** aus der Rohstoffdispersion durch das zugegebenen mindestens eine Schwermetallfällungsmittel (4) mehr als 80 % der insgesamt gelöst vorliegenden Schwermetalle ausgefällt werden, wobei nach der Schwermetallfällung mindestens 80 % des zuvor gelöst vorliegenden P2O5 in der Rohstoffdispersion weiterhin gelöst vorliegen.

7. Phosphatangereichertes, schwermetallabgereichertes Düngergranulat (11) nach Anspruch 1, 3, 4, 5 oder 6 oder Verfahren nach Anspruch 2, 3, 4, 5 oder 6, **dadurch gekennzeichnet, dass** das phosphatangereicherte, schwermetallabgereicherte Düngergranulat (10) eine mindestens 30 % höhere Phosphatkonzentration als das oder die zugeführte(n) anorganische(n) Sekundärphosphat(e) aufweist.

8. Phosphatangereichertes, schwermetallabgereichertes Düngergranulat (11) nach Anspruch 1, 3, 4, 5, 6 oder 7 oder Verfahren nach Anspruch 2, 3, 4, 5, 6 oder 7, **dadurch gekennzeichnet, dass** das phosphatangereicherte, schwermetallabgereicherte Düngergranulat (10) eine mindestens 20 % geringere Schwermetallkonzentration in Summe als das oder die zugeführte(n) anorganische(n) Sekundärphosphat(e) aufweist.

9. Phosphatangereichertes, schwermetallabgereichertes Düngergranulat (11) nach einem der Ansprüche 1, 3-8 oder Verfahren nach einem der Ansprüche 2-8, **dadurch gekennzeichnet, dass** mindestens ein zusätzlicher Phosphatträger, ausgewählt aus der Gruppe umfassend Ammoniumphosphat, Kaliumphosphat und Kristallisationsprodukte aus der Phosphorelimination, ausgewählt aus der Gruppe umfassend Struvit, Brushit und hydroxyxlapatitähnliche Ca-P-Phase, in einem Bereich von 1 bis 70 %, bezogen auf das fertige erfindungsgemäße Düngegranulat, so zugegeben wird, dass dadurch ein Düngergranulat mit einem Gesamt-P2O5-Gehalt von größer als 15 %, einem neutral-ammoniumcitratlöslichen Phosphatanteil von größer 60% davon und einer Wasserlöslichkeit von kleiner als 30%, bezogen auf den gesamt-P2O5-Gehalt resultiert.

10. Phosphatangereichertes, schwermetallabgereichertes Düngergranulat (11) nach einem der Ansprüche 1, 3-9 oder Verfahren nach einem der Ansprüche 2-9, **dadurch gekennzeichnet, dass** nach Prozessschritt f) und vor und/oder während der Granulation mindestens ein oder mehrere Strukturstoff(e), ausgewählt aus der Gruppe umfassend Torf, Humus, Pyrolysesubstrate aus Biomasse, Biokohle, Klärschlämme, Gärreste, Gülle, Tierausscheidungen, Tier- und Fischmehl, als weitere Komponenten (13) hinzugefügt werden.

11. Phosphatangereichertes, schwermetallabgereichertes Düngergranulat (11) nach einem der Ansprüche 1, 3-10 oder Verfahren nach einem der Ansprüche 2-10, **dadurch gekennzeichnet, dass** nach Prozessschritt f) und vor und/oder während der Granulation als weitere Komponente (13) Huminsäure und/oder Fulvosäure und/oder deren Salze (Humate, Fulvate) zugegeben werden.

12. Vorrichtung zur Herstellung des phosphatangereicherten, schwermetallabgereicherten Düngergranulats (11) nach einem der vorangehenden Ansprüchen 1 oder 3 bis 11, umfassend eine erste Einheit
▪ entweder aus mindestens einem ersten Mischbehälter zur Zuführung und/oder Mischung zumindest des anorganischen Sekundärphosphats (1) und des Reaktionsmittels (2), wodurch eine Rohstoffdispersion erhalten wird, wobei für die Inkubationszeit entweder der erste Mischbehälter genutzt wird und/oder weitere Behälter vorhanden sind, in die die Rohstoffdispersion für die Inkubationszeit überführt und gemischt wird, und daran anschließend einen Einrichtung zum Aufteilen der erzeugten Rohstoffdispersion auf Prozess-Strang A und B,
▪ oder eine Einheit aus einer Einrichtung zum Aufteilen des mindestens einen anorganischen Sekundärphosphates (1) auf Prozess-Strang A und B,
wobei sich daran mindestens ein Mischbehälter zur Zuführung und/oder Mischung zumindest des jeweils aufgeteilten anorganischen Sekundärphosphats (1) und des Reaktionsmittels (2), wodurch eine Rohstoffdispersion erhalten wird, anschließt, wobei für die Inkubationszeit entweder der Mischbehälter genutzt wird und/oder weitere Behälter vorhanden sind, in denen die Rohstoffdispersion für die Inkubationszeit überführt und gemischt wird,
sowie weiterhin umfassend im Prozess-Strang A
▪ mindestens einen Mischbehälter mindestens zur Zuführung der aufgeteilten Rohstoffdispersion im Prozess-Strang A und mindesten einem Schwermetallfällungsmittels (4),
▪ mindestens eine Abtrenneinheit zur Abtrennung zumindest eines Teils der phosphathaltigen, schwermetallarmen flüssigen Phase (5) der Rohstoffdispersion und zur Ausschleusung des übrigen schwermetallhaltigen Filterkuchens (6) aus dem Prozess,
wobei die Abtrenneinheit in den vorstehenden Mischbehälter integriert oder davon separat ist,
▪ mindestens einen Reaktionsbehälter, in dem die Ausfällung von Phosphat (7) aus der phosphathaltigen flüssigen (5) Phase mindestens anteilig erfolgt,
▪ mindestens eine Abtrenneinheit zur Abtrennung zumindest eines Teils des ausgefällten Phosphates (7), worin
∘ mindestens eine Rückführeinheit für die abgetrennte flüssige Phase (8) zum Mischbehälter zur Herstellung einer Rohstoffdispersion analog Prozessschritt a) und/oder zur Granulier- und/oder Extrudiereinheit analog Prozessschritt g), und
∘ mindestens eine Überführungseinheit für das abgetrennte ausgefällten Phosphat (7) zur Granulier- und/oder Extrudiereinheit analog Prozessschritt g) integriert sind und/oder daran separat anschließen, und
im Prozess-Strang B
▪ mindestens eine Abtrenneinheit zur Abtrennung zumindest eines Teils der flüssigen Phase (3),
▪ mindestens eine Granulier- und/oder Extrudiereinheit zum Granulieren und/oder Extrudieren mindestens eines Teils des im Prozess-Strang A erzeugten ausgefällten Phosphates (7) und mindestens einem Teil der verbleibenden Rohstoffdispersion mit reduzierter flüssiger Phase (9) aus Prozessschritt f),
wobei in dieser Granulier- und/oder Extrudiereinheit weitere Komponenten (13) zuführbar sind und/oder die Mischung mischbar ist,
wobei mindestens eine Zuführungseinheit von der Abtrenneinheit zum Überführen der Rohstoffdispersion in die Granulier- und/oder Extrudiereinheit vorhanden ist,
▪ mindestens eine Rückführeinheit für die abgetrennte flüssige Phase (11, 11') ohne Schwermetallabscheidung oder nach der teilweisen Absonderung der Schwermetalle (12) zum Mischbehälter zur Herstellung einer Rohstoffdispersion analog Prozessschritt a) und/oder zur Granulier- und/oder Extrudiereinheit.

13. Verwendung des phosphatangereicherten, schwermetallabgereicherten Düngergranulats (11) nach einem oder mehreren der Ansprüche 1 bis 11 zur Nährstoffzufuhr in der Land-, Forstwirtschaft und/oder im Gartenbau **dadurch gekennzeichnet, dass** das phosphatangereichertes, schwermetallabgereicherten Düngergranulat (11) mindestens ein anorganisches Sekundärphosphat (1) umfasst, sowie einen größer 60 % neutral-ammoniumcitratlöslichen P2O5-Anteil.
